(19) Europäisches Patentamt
European Patent Office
Office européen des brevets

(11) **EP 4 517 151 A2**

(12) **EUROPÄISCHE PATENTANMELDUNG**

(43) Veröffentlichungstag:
05.03.2025   Patentblatt 2025/10

(21) Anmeldenummer: 25153181.0

(22) Anmeldetag: **24.01.2023**

(51) Internationale Patentklassifikation (IPC):
*F16T 1/48* (2006.01)

(52) Gemeinsame Patentklassifikation (CPC):
F16T 1/48

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **24.01.2022   DE 102022101585**

(62) Dokumentnummer(n) der früheren Anmeldung(en) nach Art. 76 EPÜ:
**23701935.1 / 4 469 713**

(71) Anmelder: **GESTRA AG**
**28215 Bremen (DE)**

(72) Erfinder:
• **JANZEN, Sergej**
**27619 Schiffdorf (DE)**
• **NEUBERT, Ben-Noah**
**28207 Bremen (DE)**

(74) Vertreter: **HL Kempner Patentanwälte, Solicitors (England and Wales), Irish Patent Agents Partnerschaft mbB Bürkleinstraße 10 80538 München (DE)**

Bemerkungen:
Diese Anmeldung ist am 21.01.2025 als Teilanmeldung zu der unter INID-Code 62 erwähnten Anmeldung eingereicht worden.

(54) **KONDENSATABLEITER, SENSORVORRICHTUNG UND VERFAHREN ZUM ERFASSEN EINES ZUSTANDES EINES STRÖMUNGSPFADES**

(57)   Die Erfindung betrifft Regelarmatur (1) zur Regelung des Durchflusses von Fluiden, insbesondere Kondensatableiter (2) zum Ableiten von flüssigem Kondensat, mit
- einem Gehäuse (9) mit einem Einlassflansch (3) und einem Auslassflansch (5), und
- einer an dem Gehäuse (9) befestigten Sensorvorrichtung (10) zum Überwachen des Betriebszustands der Regelarmatur (1), wobei die Sensorvorrichtung (10) eine Kopplungsbaugruppe (14) zur Kopplung mit dem Gehäuse (9) aufweist. Die Erfindung schlägt dabei vor, dass die Kopplungsbaugruppe (14) umfasst:
ein Kopplungsteil, welches mit einer korrespondierenden Kopplungs-Schnittstelle (9a) des Gehäuses (9) lösbar in Eingriff bringbar ist,
- ein mittelbar und körperschallleitend mit dem Gehäuse (9) verbundenes Halteteil (16), welches zur form- und/oder kraftschlüssigen Verbindung mit einem ersten Sensor (12) und zur zumindest mittelbaren Verbindung mit dem Kopplungsteil eingerichtet ist, und
- eine Sensor-Aufnahme, die dem Halteteil (16) zugeordnet und zur Aufnahme eines zweiten Sensors zur Detektion der Temperatur eingerichtet ist.

Fig. 1

**Beschreibung**

Die vorliegende Erfindung betrifft einen Kondensatableiter zum Ableiten von flüssigem Kondensat mit einem Gehäuse mit einem Einlassflansch und einem Auslassflansch und einer an dem Gehäuse befestigten Sensorvorrichtung zum Überwachen des Betriebszustands der Regelarmatur, wobei Sensorvorrichtung eine Kopplungsbaugruppe zur Kopplung mit dem Gehäuse aufweist.

Regelarmaturen der eingangs genannten Art, wie beispielsweise Kondensatableiter, sind allgemein bekannt. Sie werden zur Regelung des Durchflusses von Fluiden in Leitungen, Behältern, Rohrsystemen oder dergleichen eingesetzt. In vielen Anlagen der chemischen, pharmazeutischen und energietechnischen Industrie wird Wasserdampf als Wärmeträgermedium verwendet, welcher durch entsprechende Rohrsysteme und Regelarmaturen geleitet wird. Dabei wird der Wasserdampf meist zentral in verschiedenen Druckstufen, beispielsweise von einem Dampferzeuger, zur Verfügung gestellt. Durch Verrichtung von Arbeit durch Dampf-, Wärmeverluste oder dergleichen während der jeweiligen Anwendungen kommt es bedingt durch Energieabgabe zur Kondensation eines Teils des Dampfes. Statt Wasserdampf können auch andere Medien eingesetzt werden, die in der Dampfphase und oder der flüssigen Phase vorliegen können. Bei vielen Anwendungen soll die flüssige Phase, das Kondensat, abgetrennt und abgeführt werden, wobei vielfach sogenannte Kondensatableiter oder verkürzt Ableiter eingesetzt werden. Bei einigen Prozessen kann es beispielsweise zum Dampfschlag kommen. Beim Dampfschlag brechen Dampfblasen in einer kühleren Flüssigkeitsumgebung plötzlich in sich zusammen. Auch um dies zu verhindern und um für einen effektiven Energieeinsatz zu sorgen, muss Kondensat frühzeitig aus dem System genommen werden. Dies erfolgt zumeist durch besagte Kondensatableiter. Auch bei der Rückführung von Kondensat in das System kommen Kondensatableiter zum Einsatz, um zu gewährleisten, dass sich in den noch immer unter Druck stehenden Leitungen für die Rückführung ausschließlich Wasser befindet. Es sind verschiedene Typen von Kondensatableitern bekannt. Sie haben ein Verschlussorgan gemein, welches dazu eingerichtet ist, den Strömungspfad innerhalb des Kondensatableiters und eine Abführleitung zum Ableiten von Kondensat selektiv zu sperren bzw. freizugeben. Mechanische (Schwimmer-) Kondensatableiter nutzen die physikalischen Eigenschaften des Dampfes und des Wassers. Als Verschlussorgan wird ein beispielsweise kugelförmiger Schwimmer verwendet, der ein Ventil betätigt bzw. öffnet, wenn das Kondenswasser und damit der Schwimmer steigt. Andere Verschlussorgane umfassen Bimetalle oder Membranen, welche temperaturabhängig das Öffnen und Schließen des Verschlussorgans kontrollieren.

In solchen Anlagen kann es beispielsweise zu Verschleißerscheinungen, Verschmutzungen und/oder Ablagerungen und ferner aufgrund von Auswaschungen des transportierten Dampfes bzw. Kondensats zur Bildung von Magnetit kommen. Dadurch kann es zu Leckagen oder Blockaden in den in den Anlagen verwendeten Kondensatableitern kommen.

Im laufenden Betrieb führt eine Leckage zu Dampfverlusten und senkt damit den Wirkungsgrad der jeweiligen Anlage. Dadurch entstehen erhebliche Kosten, sodass der Bedarf nach einer frühzeitigen Erkennung von Leckagen besteht. Häufig werden daher regelmäßige Wartungsintervalle durchgeführt. Damit werden die Stillstandzeiten der jeweiligen Anlage erhöht, was nachteilig ist. Üblicherweise ist in Anlagen ohne regelmäßige Prüfung bzw. Wartung mit einer Ausfallrate an defekten Kondensatableitern in einer Größenordnung von 15 bis 25 % zu rechnen. Durch regelmäßige durchzuführende Prüfungen lässt sich diese Ausfallrate deutlich verringern.

Aufgrund der hohen Druckbeaufschlagung der Regelarmaturen, wie insbesondere der Kondensatableiter, ist eine Blockade bzw. beginnende Verstopfung des Strömungspfades ferner auch aus Sicherheitsgründen unbedingt zu detektieren, um Schäden an der jeweiligen Anlage und dem gesamten Produktionsbetrieb, beispielsweise durch Explosionen aufgrund des mit hoher Geschwindigkeit strömenden Wasserdampfes, welcher Kondenswassertropfen mit hohen Geschwindigkeiten mitreißen kann, zu verhindern. Es besteht der Bedarf nach einer frühzeitigen Erkennung von Leckagen und Blockaden, da beispielsweise blockierende Kondensatableiter zu erheblichen Reduzierungen der Leistung der jeweiligen Anlage führen können und undichte Kondensatableiter Dampfverluste zur Folge haben, die wiederum einen erheblichen wirtschaftlichen Verlust darstellen. Weiterhin ist mit einem Druckanstieg in Kondensatnetzen, also in einem System mit mehreren Kondensatableitern, zu rechnen. Dadurch bedingte Schwierigkeiten beim Ableiten können dann an mehreren Kondensatableitern in der Anlage auftreten. Zudem kann zusätzlich ein Kondensatstau entstehen, welcher Wasserschläge verursachen kann und zudem zu erheblichen Schäden der Anlage führen kann. Als Wasserschlag wird hierbei ein Druckstoß bezeichnet, der durch eine schnelle Änderung der Strömungsgeschwindigkeit in der Rohrleitung verursacht wird.

Es sind Sensorvorrichtungen bekannt, welche beispielsweise im Bereich des Kondensatableiters oder anderer Regelarmaturen Vibrationen bzw. Temperaturen erfassen, deren Änderung Rückschlüsse auf Leckagen oder Blockaden zulassen. Derartige Sensorvorrichtungen reagieren allerdings sehr empfindlich auf Störgrößen im Betrieb der Anlagen, wie beispielsweise Grundschwingungen der Anlagen oder auch betriebsbedingte Temperaturschwankungen. Aufgrund dessen sind derartige Sensorvorrichtungen zumeist sehr komplex aufgebaut, um den Einfluss von Störgrößen zu minimieren. Eine derartige Sensorvorrichtung wird beispielsweise in der WO 2019/003692 A1 offenbart. Bei dieser Vorrichtung liegt eine Sondenspitze an dem Gehäuse an, wobei die Vibrationen des Gehäuses eine Relativbewegung der Sondenspitze relativ zu einem piezoelektrischen Sensor anregen. Nachteilig neben dem komplexen Aufbau ist hierbei die erhöhte Verschleißanfälligkeit und eine Verschmutzung der sich bewegenden und mit dem Gehäuse in direktem Kontakt stehenden Sondenspitze. Andere Sensorvorrichtungen liefern teils nur ungenaue Messergebnisse, da die Sensorsignale stark von Störgrößen beeinflusst sind.

Es ist Aufgabe der vorliegenden Erfindung, zumindest einen der aus dem Stand der Technik bekannten Nachteile zu überwinden. Insbesondere ist Aufgabe der vorliegenden Erfindung, die Zuverlässigkeit und Robustheit von Sensorvorrichtungen zur Überwachung des Betriebszustandes von Regelarmaturen zu erhöhen und damit die Sicherheit und Betriebszeit von Regelarmaturen, insbesondere Kondensatableitern der eingangs genannten Art, insgesamt zu verbessern. Insbesondere sollen auch Anlagenstillstandzeiten an den jeweiligen Regelarmaturen minimiert und Betriebszustände überwacht werden.

Die vorliegende Erfindung löst die eingangs genannte Aufgabe in einem ersten Aspekt durch eine Regelarmatur mit den Merkmalen gemäß Anspruch 1.

Gemäß dem ersten Aspekt der Erfindung ist die Regelarmatur ein Kondensatableiter, mit einem zwischen dem Einlassflansch und dem Auslassflansch ausgebildeten Strömungspfad, wobei in dem Strömungspfad ein Verschlussorgan angeordnet ist, welches dazu eingerichtet ist, den Strömungspfad selektiv zu sperren und/oder zu verbinden. Die Erfindung löst die eingangs genannte Aufgabe in Bezug auf den ersten Aspekt dadurch, dass die Sensorvorrichtung stromabwärts des Verschlussorgans angeordnet ist und umfasst: einen Sensor zur Erfassung von Körperschall, und/oder einen Sensor zur Detektion der Temperatur der Kopplungsbaugruppe und/oder des Gehäuses, wobei die Sensorvorrichtung dazu eingerichtet ist, durch Erfassen des Körperschalls der Kopplungsbaugruppe und/oder des Gehäuses eine Leckage des Kondensatableiters zu erkennen und/oder durch Erfassen der Temperatur der Kopplungsbaugruppe und/oder des Gehäuses eine Blockade des Strömungspfades zu erkennen. Die Erfinder erkannten vorteilhaft, dass in einem Kondensatableiter stromabwärts des Verschlussorgans im Falle einer Leckage die Beeinflussung des Körperschalls am größten ist, da in diesem Bereich die Intensität des Körperschalls, beispielsweise aufgrund von Turbulenzen am größten ist.

Vorzugsweise ist die Kopplungsbaugruppe form- und/oder kraftschlüssig mit dem Sensor verbunden und dazu eingerichtet ist, eine lösbare, form- und/oder kraftschlüssige Verbindung mit dem Gehäuse einzugehen, um im montierten Zustand den Körperschall des Gehäuses zu dem Sensor zu leiten. Als Körperschall wird Schall bezeichnet, der sich in einem Festkörper ausbreitet. Ein Festkörper kann neben Normalspannungen auch Schubspannungen aufnehmen, sodass sich Körperschall bzw. Körperschallwellen als Longitudinalwellen und Transversalwellen ausbreiten können. Bevorzugt ist der Sensor dazu eingerichtet, die Longitudinalwellen und/oder Transversalwellen in der Kopplungsbaugruppe zu erfassen. Wartungsintervalle müssen somit nicht länger routinemäßig durchgeführt werden, sondern können anhand der Sensorsignale bedarfsgerecht erfolgen. Somit werden die Stillstandzeiten der jeweiligen Anlage wirksam reduziert und die Sicherheit der Regelarmatur im Betrieb erhöht. Insbesondere liefert die Erfindung auch ein Beitrag zur präventiven Wartung, zur Prozessüberwachung, der Erkennung und Lokalisierung von Defekten in Anlagen und in deren Komponenten wie insbesondere Regelarmaturen. Ferner führt die schnelle Erkennung von insbesondere Leckagen zu einer höheren Effizienz etwaiger Anlagen, welche die Regelarmatur aufweisen, da Dampfverluste und damit Energieverluste frühzeitig behoben werden können.

Die Erfinder nutzen vorteilhaft, dass Fluide, welche durch die Regelarmatur strömen, Körperschall eines definierten Frequenzbereichs in Abhängigkeit des Drucks, der Strömungsgeschwindigkeit und des eingestellten Betriebszustandes, insbesondere Aggregatszustand und Zusammensetzung des Mediums verursachen. Eine Änderung des Körperschalls des Gehäuses zeigt somit in zuverlässiger Weise eine Veränderung der Strömung bzw. des Drucks innerhalb der Regelarmatur an und ermöglicht zuverlässig Rückschlüsse auf den Betriebszustand der Regelarmatur und insbesondere Leckagen. Durch die erfindungsgemäße Kopplungsbaugruppe, welche lösbar mit dem Gehäuse durch eine form- und/oder kraftschlüssige Verbindung gekoppelt ist, wird eine bei Bedarf lösbare körperschallleitende Verbindung geschaffen. Dadurch, dass nicht unmittelbar der Sensor mit dem Gehäuse verbunden ist, sondern dieser lediglich mittelbar über die Kopplungsbaugruppe körperschallleitend mit dem Gehäuse verbunden ist, wird der Sensor insbesondere thermisch abgeschirmt. Durch die Kopplungsbaugruppe, welche sowohl die Kopplung der Sensorvorrichtung mit dem Gehäuse als auch die Leitung des Körperschalls hin zu dem Sensor gewährleistet, kann der Aufbau der Sensorvorrichtung insgesamt vereinfacht werden. In anderen Worten vereinfacht die Funktionsintegration der Kopplungsbaugruppe als Mittel zum mechanischen Koppeln und Mittel zum Leiten der zu erfassenden Messgröße, den Aufbau der Sensorvorrichtung. Die form- und/oder kraftschlüssige Verbindung zwischen der Kopplungsbaugruppe und dem Sensor sowie der Kopplungsbaugruppe und dem Gehäuse gewährleistet ferner einen robusten Aufbau der Sensorvorrichtung. Die Verbindung durch Form- und/oder Kraftschluss eignet sich ferner zur Leitung von Körperschall und ermöglicht eine reversible Montage der einzelnen Komponenten. Im Gegensatz zu bekannten Vorrichtungen wird der Körperschall bis hin zum eigentlichen Sensor geleitet und nicht zwischenzeitlich in eine Relativbewegung zwischengeschalteter Bauteile gewandet. Somit wird der mechanische Verschleiß reduziert.

Erfindungsgemäß soll unter dem Begriff der Regelarmatur eine Baueinheit zum Leiten von Fluiden, insbesondere Gasen und Flüssigkeiten oder Mischungen daraus verstanden werden, welche die Strömungen dieser Fluide beeinflusst. Beispiele hierfür sind Ventile, Armaturen und Kondensatableiter, aber auch beispielsweise Pumpen. Der Begriff Flansch ist erfindungsgemäß so zu verstehen, dass er eine Kopplung der Regelarmatur mit benachbarten Bauelementen, insbesondere Rohren ermöglicht; dies kann beispielsweise mittels mehrerer Bolzen erfolgen, die durch Flanschringe gesteckt werden, aber alternativ auch mittels anderer Verbindungselemente oder Muffen, einschließlich Schweißverbindungen, bei denen keine Flanschringe zum Einsatz kommen.

Auch können erfindungsgemäß zwei Sensoren eingesetzt werden, beispielsweise ein Sensor zur Erfassung von Körperschall, ein weiterer Sensor zur Erfassung einer weiteren physikalischen Größe zur Überwachung des Betriebszustandes der Regelarmatur.

Vorzugsweise erstreckt sich die Kopplungsbaugruppe in einer Längsrichtung von dem Gehäuse zu dem Sensor und der Sensor ist zur Erfassung von Longitudinalwellen eingerichtet.

Vorzugsweise weist die Kopplungsbaugruppe einen thermischen Isolator auf, der dazu eingerichtet ist, die Wärmeübertragung von dem Gehäuse zu dem Sensor zu reduzieren. Im Sinne der Erfindung ist ein thermischer Isolator ein fester, flüssiger oder gasförmiger Dämmstoff, der die Wärmeübertragung und insbesondere den Wärmeübergang hemmt. Die Reduzierung der Wärmeübertragung durch einen thermischen Isolator bietet zusätzlichen Schutz des Sensors oder der Sensoren, sodass die Detektion von Körperschall bzw. der Betrieb des Sensors insgesamt nicht durch die Temperaturen innerhalb des Strömungspfades der Regelarmatur verhindert wird, da Sensoren zur Erfassung von Körperschall vielfach nur in definierten Temperaturbereichen betrieben werden können.

Wärmeübertragung oder Wärmetransport ist der Transport von Energie in Form von Wärme über mindestens eine thermodynamische Systemgrenze hinweg. Bevorzugt ist der Isolator zur Reduzierung der Wärmeleitung von dem Gehäuse zu dem Sensor zumindest teilweise über die Kopplungsbaugruppe eingerichtet. Die Wärmeübertragung durch Wärmeleitung erfolgt in Richtung der Orte mit tieferen Temperaturen durch mechanische Berührung.

Weiter bevorzugt weist das Gehäuse einem zumindest abschnittsweise zwischen Einlassflansch und Auslassflansch ausgebildeten Strömungspfad auf, wobei die Sensorvorrichtung dazu eingerichtet ist, mittels des Sensors eine Leckage des Strömungspfades durch Erfassen des Körperschalls des Gehäuses zu erkennen. Die Erfinder erkannten, dass eine Leckage des Strömungspfades innerhalb der Regelarmatur, aber auch in angrenzenden Rohrabschnitten eines Rohrleitungssystems verschiedene Effekte auf das Strömende Fluid hat. So bedingt die Leckage u.a. einen Druckabfall, eine Änderung der Strömungsgeschwindigkeit und Veränderung des Aggregatszustandes und der Zusammensetzung des Mediums, welche eine Veränderung des Körperschalls des Gehäuses der Regelarmatur bedingen. Somit kann zuverlässig eine Leckage erkannt werden innerhalb der Regelarmatur, aber auch eines mit der Regelarmatur gekoppelten Rohrsystems.

Vorzugsweise ist der Sensor ein piezoelektrischer Sensor. Piezoelektrische Sensoren arbeiten mit dem piezoelektrischen Effekt und eignen sich beispielsweise zur Bestimmung von Beschleunigung, Spannungen oder Kräften. Durch die körperschallleitende Verbindung des Gehäuses mit dem Sensor mittels der Kopplungsbaugruppe ist der Sensor mechanischen Schwingungen aufgrund des Körperschalls ausgesetzt. Aufgrund des Körperschalls kommt es zu einer mechanischen Deformation von Piezoelementen des piezoelektrischen Sensors und damit insbesondere zu einer Verschiebung der elektrischen Polarisation an der metallisierten Oberfläche des jeweiligen Piezoelements, wodurch eine Oberflächenspannung bzw. Ladung entsteht, die sich als messbares elektrisches Signal technisch nutzen lässt. Dieser Effekt wird bei passiven piezoelektrischen Sensoren, wie Beschleunigungs- oder Schallemissions-Aufnehmern unter anderem zur Erfassung von Körperschall angewandt. Besonders bevorzugt umfasst der piezoelektrische Sensor mindestens ein erstes Piezoelement und ein zweites Piezoelement und vorzugsweise ein Paar Elektroden. Durch die Kombination von mindestens zwei Piezoelementen wird die Messgenauigkeit weiter erhöht. Vorzugsweise weist der piezoelektrische Sensor eine seismische Masse auf, welche dazu eingerichtet ist, sich in Abhängigkeit des von dem Gehäuse übertragenen Körperschalls relativ zu dem ersten Piezoelement und/oder dem zweiten Piezoelement zu bewegen. Weiter bevorzugt weist der piezoelektrische Sensor einen zu der seismischen Masse beabstandeten Frontleiter auf, welcher mit der Kopplungsbaugruppe gekoppelt und dazu eingerichtet ist, das erste Piezoelement und das zweite Piezoelement relativ zu der seismischen Masse anzuordnen.

Gemäß einer bevorzugten Ausführungsform weist die Kopplungsbaugruppe ein zumindest mittelbar körperschallleitend mit dem Gehäuse verbundenes Halteteil auf. Vorzugsweise ist das Halteteil zur form- und/oder kraftschlüssigen Verbindung mit dem Sensor und zur zumindest mittelbaren Verbindung mit dem Kopplungsteil eingerichtet ist.

Weiter bevorzugt ist das Halteteil zur form- und/oder kraftschlüssigen Verbindung der seismischen Masse und des Frontleiters eingerichtet ist, derart, dass das mindestens ein erstes Piezoelement und vorzugsweise mindestens ein zweites Piezoelement zwischen der seismischen Masse und dem Frontleiter aufgenommen sind. Somit können die Piezoelemente mit dem Frontleiter und der seismischen Masse und vorzugsweise den Elektroden vorgespannt angeordnet werden. Dadurch, dass mittels des Halteteils sowohl die seismische Masse als auch der Frontleiter körperschallleitend mit dem Gehäuse verbunden sind, erfahren das eine oder die mehreren Piezoelemente Druckkräfte und stellen eine messbare Spannung insbesondere an deren Elektroden bereit. Die Änderung dieser Spannung zeigt eine Änderung des Körperschalls des Gehäuses an und ermöglicht so die Überwachung des Betriebszustandes der Regelarmatur.

Vorzugsweise ist die seismische Masse bewegbar mit dem Halteteil in Eingriff und die Kopplungsbaugruppe ferner ein mit dem Halteteil gekoppeltes Spannteil umfasst, welches dazu eingerichtet ist, Körperschall auf die seismische Masse zu übertragen, sodass sich die seismische Masse relativ zu dem ersten Piezoelement und/oder dem zweiten Piezoelement bewegt.

Gemäß einer bevorzugten Ausführungsform ist der thermische Isolator aus einem festen Dämmstoff ausgebildet und zwischen dem Sensor und dem Gehäuse angeordnet. Durch den thermischen Isolator aus einem festen Dämmstoff wird der Sensor wirksam gegenüber der Kopplungsbaugruppe thermisch abgeschirmt. Bevorzugt ist die Wärmeleitfähigkeit des thermischen Isolators aus einem festen Dämmstoff geringer als die Wärmeleitfähigkeit von Luft, sodass die thermische Abschirmung des Sensors weiter verbessert wird.

Gemäß einer weiteren bevorzugten Ausführungsform weist die Kopplungsbaugruppe ein Kopplungsteil auf, welches mit einer korrespondierenden Kopplungs-Schnittstelle des Gehäuses in Eingriff ist, und ein Halteteil, welches zur Kopplung mit dem Sensor eingerichtet ist. Somit kann eine Funktionsteilung durch das Kopplungsteil und das Halteteil realisiert werden und die Komplexität der Kopplungsbaugruppe bzw. der einzelnen Teile der Kopplungsbaugruppe reduziert werden.

Vorzugsweise weist die Kopplungsbaugruppe ein Kopplungsteil auf, welches mit einer korrespondierenden Kopplungs-Schnittstelle des Gehäuses lösbar in Eingriff bringbar und mit dem Halteteil körperschallleitend gekoppelt ist. Somit kann durch die Funktionsteilung eine bedarfsgerechte Materialauswahl erfolgen und das Kopplungsteil beispielsweise aus einem temperaturbeständigeren Werkstoff ausgebildet sein oder wahlweise besonders chemikalienresistent aufgrund der unmittelbaren Anordnung am Gehäuse. Das Halteteil kann dagegen aus Gewichts- oder Kostengründen aus einem anderen Werkstoff gefertigt sein.

Die vorliegende Erfindung löst die eingangs genannte Aufgabe in einem zweiten Aspekt durch einen Kondensatableiter mit den Merkmalen gemäß Anspruch 5.

Insbesondere schlägt die Erfindung gemäß dem zweiten Aspekt vor, der gleichzeitig ein bevorzugtes Ausführungsbeispiel gemäß dem ersten Aspekt ist, dass die Kopplungsbaugruppe ein bzw. das Kopplungsteil, welches zur lösbaren Verbindung mit dem Gehäuse eingerichtet ist, und einen Adapter aufweist, der dazu eingerichtet ist, den Sensor körperschallleitend und/oder temperaturleitend mit dem Kopplungsteil zu verbinden. Durch einen zusätzlichen Adapter kann die Komplexität des Kopplungsteils reduziert werden. Weiterhin ist der Adapter geringeren thermischen Belastungen ausgesetzt, sodass die mittelbare Kopplung des Sensors über den Adapter mit dem Kopplungsteil den Sensor schützt. Vorzugsweise kann es sich bei dem Kopplungsteil um eine einfache Schraube handeln, welche einen Kopfabschnitt mit einer Kopplungs-Aufnahme aufweist. Eine solche Kopplungs-Aufnahme kann beispielsweise durch eine Gewindebohrung oder eine Außenkontur, beispielsweise ein Außengewinde, bereitgestellt sein. Somit kann das Kopplungsteil durch ein einfaches und robustes Standardteil ausgebildet sein und der Adapter, welcher geringeren Belastungen ausgesetzt ist, die Funktionsintegration, nämlich die Aufnahme des Sensors und Verbindung mit dem Kopplungsteil, übernehmen.

Bevorzugte Ausführungsformen der Regelarmatur gemäß dem ersten Aspekt der Erfindung sind ebenso bevorzugte Ausführungsformen in Bezug auf den zweiten Aspekt der Erfindung und es wird auf die vorstehende Beschreibung der damit einhergehenden Vorteile und möglichen Ausgestaltungen verwiesen Es soll dabei verstanden werden, dass es sich bei dem Kondensatableiter gemäß dem zweiten Aspekt auch um eine Regelarmatur im Allgemeinen handeln kann.

Vorzugsweise weist die Kopplungsbaugruppe ferner ein bzw. das mit dem Sensor gekoppelte Halteteil auf, wobei der Adapter zur form- und/oder kraftschlüssigen Verbindung mit dem Halteteil eingerichtet ist. Somit verbindet der Adapter das Kopplungsteil und das Halteteil miteinander. Das Halteteil kann dementsprechend auch konstruktiv einfach gestaltet sein, beispielsweise als eine Schraube. Der Adapter weist dabei entsprechende Montage-Schnittstellen zum form- und/oder kraftschlüssigen Verbinden mit dem Halteteil und dem Kopplungsteil auf.

Weiter bevorzugt weisen das Kopplungsteil und das Halteteil einen metallischen Werkstoff auf und der Adapter weist einen nicht-metallischen Werkstoff, insbesondere eine technische Keramik und/oder ein Polymer auf bzw. ist vollständig aus einem solchen Werkstoff gefertigt. Somit können das Halteteil und das Kopplungsteil kostengünstig, beispielsweise aus Stahl gefertigt werden. Insbesondere beim Kopplungsteil bietet ein metallischer Werkstoff Vorteile hinsichtlich der Wärmeleitung. Die gute Wärmeleitung metallischer Werkstoffe ermöglicht eine genauere Erfassung bzw. genauere Rückschlüsse auf die Temperatur des Gehäuses durch Erfassung der Temperatur des Kopplungsteils. Der Adapter, welcher das Halteteil mit dem Kopplungsteil verbindet, kann aus einem dämmenden Werkstoff gefertigt sein und beispielsweise aus einem Polymer, sodass fertigungstechnisch ein großer Gestaltungsspielraum bereitgestellt ist. Beispielsweise kann es sich bei dem Adapter um ein Spritzgussteil handeln.

Weiter bevorzugt erstreckt sich das Halteteil entlang einer Längsachse mit einer Länge, wobei der Adapter eine Adapter-Montageschnittstelle aufweist, insbesondere eine Gewindebohrung oder ein Außengewinde, die dazu eingerichtet ist, mit dem Halteteil entlang von mindestens 1/3 der Länge des Halteteils in Eingriff zu sein. Somit ist das Halteteil durch den Adapter ausreichend fixiert und Resonanzschwingungen des Halteteils, welche den Körperschall überlagern, werden reduziert.

Vorzugsweise ist das Kopplungsteil als eine erste Schraube mit einem ersten Schaftabschnitt und einem ersten Kopfabschnitt ausgebildet. Weiter bevorzugt ist das Halteteil als eine zweite Schraube mit einem zweiten Schaftabschnitt und einem zweiten Kopfabschnitt ausgebildet. Der Adapter ist dabei bevorzugt dazu eingerichtet, vorzugsweise lösbar, mit dem ersten Kopfabschnitt und dem zweiten Kopfabschnitt in Eingriff zu sein. Alternativ oder ergänzend weist das Kopplungsteil eine Kopplungs-Aufnahme und das Halteteil und/oder der Adapter einen korrespondierenden Kopplungsabschnitt auf, wobei die Kopplungs-Aufnahme lösbar mit dem Kopplungsabschnitt in Eingriff bringbar ist. Somit sind für das Halteteil und das Kopplungsteil Standardbauteile vorgesehen, sodass Fertigungskosten reduziert werden können. In das Kopplungsteil wird auf einfache Weise eine Kopplungs-Aufnahme eingebracht. Fertigungstechnisch einfach umsetzbar ist eine solche Kopplungs-Aufnahme als Innengewinde bzw. Gewindebohrung oder auch als Außengewinde. Weitere Außenkonturen, welche mit einer korrespondierenden Adapter-Montageschnittstelle in Eingriff bringbar sind, sind ebenfalls denkbar.

Gemäß einer bevorzugten Ausführungsform weist der Adapter einen Aufnahmeraum auf, der dazu eingerichtet ist, zumindest einen Abschnitt des Sensors aufzunehmen. Bei dem aufgenommenen Sensor handelt es sich bevorzugt um einen Temperatursensor. Ein solcher Aufnahmeraum vereinfacht die Anordnung des Sensors relativ zu der Kopplungsgruppe.

Vorzugsweise weist die Sensorvorrichtung ferner ein Sensorgehäuse mit Kopplungsabschnitten auf und der Adapter weist eine korrespondierende Gehäuse-Schnittstelle auf, die zur lösbaren Kopplung mit den Kopplungsabschnitten eingerichtet ist. Somit wird ein höheres Maß an Funktionsintegration in Bezug auf den Adapter erzielt. Weiter bevorzugt ist die Gehäuse-Schnittstelle durch eine den Aufnahmeraum in radialer Richtung begrenzende Wandung ausgebildet. Somit wird der Adapter konstruktiv vereinfacht.

Vorzugsweise erstreckt sich der Adapter entlang einer bzw. der Längsachse mit einer Adapterlänge und weist ferner eine Sensor-Aufnahme auf, welche sich vorzugsweise entlang mindestens 3/4 der Adapterlänge erstreckt. Somit erstreckt die Sensor-Aufnahme sich in einen Bereich des Adapters, angrenzend an das Kopplungsteil. Somit ist eine präzisere Temperaturerfassung der Temperatur des Kopplungsteils möglich.

Gemäß einer weiteren bevorzugten Ausführungsform weist das Kopplungsteil eine Kopplungs-Aufnahme auf, welche zur Aufnahme eines Kopplungsabschnitts des Halteteils ausgebildet ist. Bei der Kopplungs-Aufnahme kann es sich beispielsweise um eine Gewindebohrung handeln und bei dem Kopplungsabschnitt des Halteteils kann es sich bevorzugt um ein korrespondierendes Außengewinde handeln. Somit kann auf einfache Weise eine körperschallleitende Verbindung des Kopplungsteils und des Halteteils realisiert werden.

Vorzugsweise ist der Frontleiter benachbart und beabstandet zu dem Kopplungsteil und/oder dem Adapter angeordnet, sodass ein Hohlraum zwischen dem Frontleiter und der Kopplungsbaugruppe ausgebildet wird, welcher den thermischen Isolator bildet. In dem Hohlraum kann sich Luft oder ein Gas befinden, welches die Wärmeübertragung reduziert. Insbesondere Luft stellt dabei einen kostengünstigen Isolator dar.

Weiter bevorzugt ist der Frontleiter als eine Hülse ausgebildet und weist einen ersten Außendurchmesser angrenzend an das erste Piezoelement und einen zweiten Außendurchmesser angrenzend an die Kopplungsbaugruppe, insbesondere das Kopplungsteil oder den Adapter, auf, der kleiner als der erste Außendurchmesser und zur Anlage an einer korrespondierenden Anlagefläche des Kopplungsteils oder des Adapters eingerichtet ist. Insbesondere ist der erste Außendurchmesser mindestens doppelt so groß, wie der zweite Außendurchmesser. Somit dient der Frontleiter sowohl zum Vorspannen der Piezoelemente als auch zur Reduzierung des Wärmeübergangs. Der Frontleiter weist durch den kleineren zweiten Außendurchmesser nur eine geringe Kontaktfläche zum Kopplungsteil und gleichzeitig eine vergrößerte Kontaktfläche zur Umgebungsluft auf. Die Umgebungsluft kühlt den Frontleiter, während der Wärmeübergang vom Kopplungsteil durch die geringe Kontaktfläche begrenzt ist.

Gemäß einer besonders bevorzugten Ausführungsform ist der Sensor ein erster Sensor, und die Sensorvorrichtung weist ferner mindestens einen zweiten Sensor zur Detektion der Temperatur der Kopplungsbaugruppe und/oder des Gehäuses auf, wobei die Sensorvorrichtung dazu eingerichtet ist, durch Erfassen der Temperatur des der Kopplungsbaugruppe und/oder Gehäuses mittels des zweiten Sensors eine Blockade des Strömungspfades zu erkennen. Somit ermöglicht der Temperatursensor die Erfassung von Kondensatstaus bedingt durch Blockaden des Strömungspfades, welche eine Temperaturänderung bedingen. Dadurch können insbesondere Wasserschläge reduziert werden. Ferner können thermische Effekte, welche das Messergebnis des ersten Sensors beeinflussen, durch den zweiten Sensor erfasst werden und die Messgenauigkeit des ersten Sensors somit sichergestellt werden.

Weiter bevorzugt weist die Kopplungsbaugruppe, vorzugsweise das Kopplungsteil und/oder das Halteteil der Kopplungsbaugruppe, eine Sensor-Aufnahme für den zweiten Sensor auf. Somit kann der zweite Sensor auf einfache Weise durch Aufnahme in der Sensor-Aufnahme mit der Kopplungsbaugruppe gekoppelt werden, um die Temperatur der Kopplungsbaugruppe zu erfassen. Die Erfassung der Temperatur der Kopplungsbaugruppe ist dabei besonders bevorzugt, da die Kopplungsbaugruppe zur Verbindung mit dem Gehäuse der Regelarmatur eingerichtet ist und somit Rückschlüsse auf veränderte Temperaturen des Strömungspfades innerhalb des Gehäuses zulässt.

Gemäß einer weiteren bevorzugten Ausführungsform weist das Halteteil, vorzugsweise das Spannteil und/oder der Halteabschnitt des Halteteils, eine Sensor-Aufnahme für den zweiten Sensor auf. Somit kann der Temperatursensor auf einfache Weise und platzsparend in das Halteteil integriert werden.

Vorzugsweise weist die Kopplungsbaugruppe, insbesondere das Kopplungsteil, eine Wärmeleitfähigkeit λ kleiner $100\,\frac{W}{m\cdot K}$, vorzugsweise kleiner $50\,\frac{W}{m\cdot K}$, besonders bevorzugt kleiner $15\,\frac{W}{m\cdot K}$ auf. Somit wird der Einfluss der Temperatur des Gehäuses bzw. des Strömungspfades auf den Sensor weiter reduziert.

Weiter bevorzugt umfasst die Kopplungsbaugruppe, vorzugsweise das Kopplungsteil, einen keramischen Werkstoff, vorzugsweise Zirkoniumoxid.

Zirkoniumoxid weist eine geringe Wärmeleitfähigkeit von kleiner $15\,\frac{W}{m\cdot K}$ auf und ist somit zur thermischen Abschirmung des Sensors gegenüber dem Strömungspfad in dem Gehäuse geeignet. Zudem weist Zirkoniumoxid eine hohe Härte und eine gute Korrosionsbeständigkeit auf, sodass der Werkstoff für Regelarmaturen sehr gut geeignet ist.

Weiter bevorzugt umfasst die Sensorvorrichtung ferner ein Sensorgehäuse mit Kopplungsabschnitten, wobei die Kopplungsabschnitte zur Kopplung mit der Kopplungsbaugruppe und/oder dem Gehäuse eingerichtet sind. Somit wird der Sensor gegenüber Umgebungseinflüssen, wie insbesondere Feuchtigkeit und Schmutz, zuverlässig geschützt.

Gemäß einer bevorzugten Ausführungsform weist die Sensorvorrichtung einen Sender auf, welcher zur Übertragung eines Sensorsignals des ersten Sensors und vorzugsweise des zweiten Sensors an eine der Regelarmatur zugeordnete Auswerteinheit eingerichtet ist, insbesondere mittels einer Signalverbindung. Die Signalverbindung erfolgt bevorzugt kabellos, wobei die Sensorvorrichtung ferner einen Energiespeicher aufweist. Vorzugsweise umfasst die Sensorvorrichtung einen Energy Harvester, wie z. B. Thermogenerator. Die Auswerteeinheit, welche der Regelarmatur bzw. mehreren Regelarmaturen zugeordnet ist, ist bevorzugt zur Auswertung des Sensorsignals des ersten Sensors und vorzugsweise des zweiten Sensors eingerichtet, um den Betriebszustand zu überwachen und insbesondere eine Blockade und/oder Leckage zu erkennen.

Weiter bevorzugt ist die Auswerteeinheit zur Auswertung einer Vielzahl von ersten und zweiten Sensoren verschiedenen von Sensorvorrichtungen eingerichtet und dazu basierend auf diesen Sensorsignalen eine Verstopfung zu erkennen. Bei der Auswerteeinheit kann es sich um einen Prozessor handeln, welcher in einem stationären oder einem mobilen Gerät angeordnet ist und bevorzugt einen Datenspeicher aufweist.

Vorzugsweise ist die Auswerteeinheit dazu eingerichtet die Sensorsignale mit Referenzdaten des Datenspeichers zu vergleichen und basierend auf diesem Vergleich eine Leckage und/oder Blockade oder partielle Verstopfung des Strömungspfades zu identifizieren.

Gemäß einer bevorzugten Ausführungsform weist die Sensorvorrichtung, insbesondere das Sensorgehäuse, einen Signalanschluss zur Bereitstellung eines Sensorsignals oder mehrerer Sensorsignale auf, wobei der Signalanschluss mit einem Sender und/oder einer Auswerteeinheit koppelbar ist. Vorzugsweise umfasst die Sensorvorrichtung dabei einen Energy Harvester, wie z. B. Thermogenerator. Somit wird bei Anschluss einer Auswerteeinheit eine unmittelbare und autarke Signalverarbeitung ermöglicht. Die ausgewerteten Sensordaten werden mittels eines Sensors bzw. eines mit dem Sensor gekoppelten Senders entweder einem zentralen Datenspeicher, beispielsweise einer Cloud bereitgestellt oder sind mit mobilen Geräten wahlweise verbindbar, um eine Warnmeldung bzw. eine Information bzgl. des überwachten Betriebszustands anzuzeigen.

Vorzugsweise weist die Kopplungsbaugruppe einen Magneten, insbesondere Permanentmagneten zur Kopplung des Sensors bzw. der Sensoren mit dem Gehäuse auf, wobei insbesondere das Kopplungsteil einen Magneten umfasst. Ein Magnet ermöglicht im Sinne der Erfindung auf einfache Weise eine kraftschlüssige Verbindung durch magnetische Kräfte. Die Montagezeit wird somit insgesamt reduziert und die Handhabung der Sensorvorrichtung vereinfacht.

Die vorliegende Erfindung löst die eingangs genannte Aufgabe in einem dritten Aspekt durch einen Kondensatableiter mit den Merkmalen gemäß Anspruch 15.

Gemäß dem dritten Aspekt der Erfindung, der zugleich ein bevorzugtes Ausführungsbeispiel des ersten bzw. zweiten Aspekts der Erfindung ist, umfasst die Kopplungsbaugruppe: ein bzw. das Kopplungsteil, welches mit einer korrespondierenden Kopplungs-Schnittstelle des Gehäuses lösbar in Eingriff bringbar ist, ein bzw. das mittelbar und körperschalleitend mit dem Gehäuse verbundene Halteteil, welches zur form- und/oder kraftschlüssigen Verbindung mit einem ersten Sensor und zur zumindest mittelbaren Verbindung mit dem Kopplungsteil eingerichtet ist, und eine Sensor-Aufnahme, die dem Halteteil zugeordnet und zur Aufnahme eines zweiten Sensors zur Detektion der Temperatur eingerichtet ist. Somit dient das Kopplungsteil allein der Kopplung mit dem Gehäuse und das Halteteil hält den ersten Sensor und den zweiten Sensor in der Sensor-Aufnahme benachbart und beabstandet zu dem Kopplungsteil. Der erste und zweite Sensor werden somit geschützt. Insbesondere wird eine nachteilige Beeinflussung der Messergebnisse durch die hohen Temperaturen des Gehäuses, welche über das Kopplungsteil geleitet werden, vermieden.

Bevorzugte Ausführungsformen der Regelarmatur gemäß dem ersten und zweiten Aspekt der Erfindung sind ebenso bevorzugte Ausführungsformen in Bezug auf den dritten Aspekt der Erfindung und es wird auf die vorstehende Beschreibung der damit einhergehenden Vorteile und möglichen Ausgestaltungen verwiesen. Es soll dabei verstanden werden, dass es sich bei dem Kondensatableiter gemäß dem dritten Aspekt auch um eine Regelarmatur im Allgemeinen handeln kann.

Die vorliegende Erfindung löst die eingangs genannte Aufgabe in einem vierten Aspekt durch eine Sensorvorrichtung mit den Merkmalen gemäß Anspruch 17.

Die Erfindung betrifft gemäß dem vierten Aspekt eine Sensorvorrichtung für eine Regelarmatur zum Erfassen einer Blockade und/oder Leckage eines Strömungspfades, insbesondere für einen Kondensatableiter gemäß dem ersten Aspekt der Erfindung. Die Sensorvorrichtung umfasst: eine Kopplungsbaugruppe zur Kopplung mit dem Gehäuse, und mindestens einen Sensor zur Erfassung von Körperschall und/oder zur Detektion einer Temperatur der Kopplungsbaugruppe und/oder des Gehäuses. Die Erfindung löst die eingangs genannte Aufgabe gemäß dem vierten Aspekt dadurch, dass die Sensorvorrichtung zur Anordnung stromabwärts eines Verschlussorgans des Kondensatableiters und zum Erkennen mindestens eines der folgenden eingerichtet ist: einer Leckage des Kondensatableiters durch Erfassen des Körperschalls der Kopplungsbaugruppe und/oder des Gehäuses, und einer Blockade des Strömungspfades durch Erfassen der Temperatur der Kopplungsbaugruppe und/oder des Gehäuses.

Alternativ oder ergänzend wird die eingangs genannte Aufgabe in Bezug auf die Sensorvorrichtung dadurch gelöst, dass die Kopplungsbaugruppe ein Kopplungsteil, welches zur lösbaren Verbindung mit dem Gehäuse eingerichtet ist, und einen Adapter aufweist, der dazu eingerichtet ist, den Sensor körperschall- und/oder temperaturleitend mit dem Kopplungsteil zu verbinden.

Alternativ oder ergänzend wird die eingangs genannte Aufgabe in Bezug auf die Sensorvorrichtung ferner dadurch gelöst, dass die Kopplungsbaugruppe umfasst: ein Kopplungsteil, welches mit einer korrespondierenden Kopplungs-Schnittstelle des Gehäuses lösbar in Eingriff bringbar ist, ein mittelbar und körperschalleitend mit dem Gehäuse verbundenes Halteteil, welches zur form- und/oder kraftschlüssigen Verbindung mit einem ersten Sensor und zur zumindest mittelbaren Verbindung mit dem Kopplungsteil eingerichtet ist, und eine Sensor-Aufnahme, die dem Halteteil zugeordnet und zur Aufnahme eines zweiten Sensors zur Detektion der Temperatur eingerichtet ist.

Die Sensorvorrichtung gemäß dem vierten Aspekt der Erfindung macht sich die vorstehend in Bezug auf die Regelarmatur gemäß dem ersten bis dritten Aspekt der Erfindung mit einer solchen Sensorvorrichtung beschriebenen Vorteile zu eigen. Vorteile und bevorzugte Ausführungsformen gemäß dem ersten bis dritten Aspekt sind ebenso Vorteile und bevorzugte Ausführungsformen gemäß dem vierten Aspekt der Erfindung und umgekehrt.

Es soll verstanden werden, dass die erfindungsgemäße Sensorvorrichtung auch zum Erfassen einer Blockade und/oder Leckage des Strömungspfades eines Rohres oder einer anderen fluidführenden Baugruppe genutzt werden kann.

Die vorliegende Erfindung löst die eingangs genannte Aufgabe in einem fünften Aspekt durch ein Verfahren mit den Merkmalen gemäß Anspruch 18.

Durch das Bereitstellen einer Sensorvorrichtung gemäß dem vierten Aspekt der Erfindung macht sich das erfindungsgemäße Verfahren die vorstehend in Bezug auf den ersten, zweiten und dritten Aspekt der Erfindung beschriebenen Vorteile zu eigen. Vorteile und bevorzugte Ausführungsformen gemäß dem ersten, zweiten und dritten Aspekt der Erfindung sind ebenso bevorzugte Ausführungsformen und Vorteile in Bezug auf den fünften Aspekt der Erfindung und umgekehrt.

Vorzugsweise umfasst das Verfahren ferner die Schritte:

- Bereitstellen mindestens eines zweiten Sensorsignals durch einen Temperatursensor,
- Senden des zweiten Sensorsignals an die Auswerteeinheit, und
- gemeinsames Auswerten des Sensorsignals des ersten Sensors und des Temperatursensors.

Im Folgenden wird die Erfindung unter Bezugnahme auf die beigefügten Figuren anhand bevorzugter Ausführungsbeispiele beschrieben. Hierbei zeigen:

Fig. 1        eine Regelarmatur gemäß einer ersten bevorzugten Ausführungsform in einer perspektivischen Ansicht;

Fig. 2        eine Regelarmatur gemäß einer zweiten bevorzugten Ausführungsform in einer perspektivischen Ansicht;

Fig. 3a       eine Sensorvorrichtung für eine Regelarmatur gemäß Fig. 2 in einer Seitenansicht;

Fig. 3b       die Sensorvorrichtung gemäß Fig. 3a in einer geschnittenen Ansicht;

Fig. 4a       eine Ausführungsform einer Sensorvorrichtung in einer Seitenansicht;

Fig. 4b       die Sensorvorrichtung gemäß Fig. 4a in einer Schnittansicht;

Fig. 5a      eine weitere Ausführungsform einer Sensorvorrichtung in einer Seitenansicht;

Fig. 5b      die Sensorvorrichtung gemäß Fig. 5a in einer Schnittansicht;

Fig. 6a      eine weitere Ausführungsform einer Sensorvorrichtung;

Fig. 6b      eine Schnittansicht der Sensorvorrichtung gemäß Fig. 6a;

Fig. 7a      eine weitere Ausführungsform einer Sensorvorrichtung in einer Seitenansicht;

Fig. 7b      die Sensorvorrichtung gemäß Fig. 7a in einer Schnittansicht;

Fig. 8a      eine weitere Ausführungsform einer Sensorvorrichtung in einer Seitenansicht;

Fig. 8b      die Sensorvorrichtung gemäß Fig. 8a in einer Schnittansicht;

Fig. 9a      eine weitere Ausführungsform einer Sensorvorrichtung in einer Seitenansicht;

Fig. 9b      die Sensorvorrichtung gemäß Fig. 9a in einer Schnittansicht;

Fig. 10a      eine weitere Ausführungsform einer Sensorvorrichtung in einer Seitenansicht;

Fig. 10b      die Sensorvorrichtung gemäß Fig. 10a in einer Schnittansicht; und

Fig. 11      ein Verfahren zum Erfassen einer Blockade und/oder Leckage eines Strömungspfades schematisch für eine Regelarmatur gemäß Fig. 2.

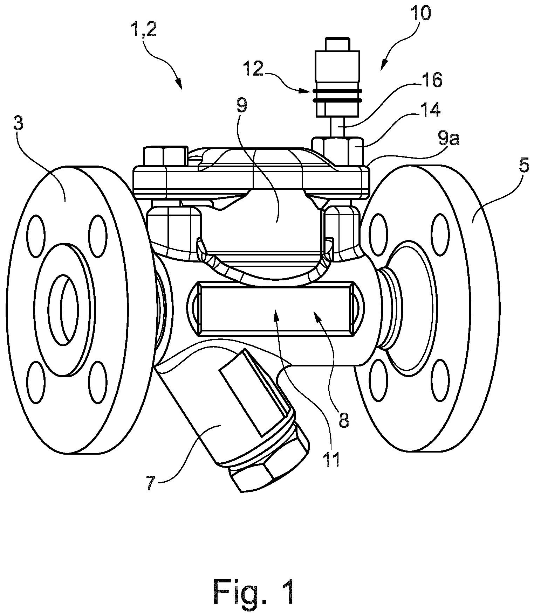

Fig. 1 zeigt eine Regelarmatur 1, welche als Kondensatableiter 2 ausgebildet ist. Der Kondensatableiter 2 umfasst einen Einlassflansch 3 und einen Auslassflansch 5, welche mit einem Rohrsystem verbindbar sind (nicht gezeigt). Das jeweilige Fluid umfassend gasförmige Bestandteile und Kondensat kann durch den Einlassflansch 3 in den Kondensatableiter 2 eintreten, welcher dann Kondensat über den Auslassflansch 5 ableitet.

Der Kondensatableiter 2 umfasst ferner eine Kondensatumlenkung mit einem Schutzsieb 7 und einen in einem Gehäuse 9 ausgebildeten Strömungspfad 8, welcher sich zwischen dem Einlassflansch 3 und dem Auslassflansch 5 erstreckt. Eine Sensorvorrichtung 10 ist mit dem Gehäuse 9 körperschallleitend verbunden.

In dem Strömungspfad 8 ist innerhalb des Gehäuses 9 ein nicht gezeigtes Verschlussorgan 11 angeordnet ist, welches dazu eingerichtet ist, den Strömungspfad 8 selektiv freizugeben. Dabei handelt es sich insbesondere um ein Bimetall oder eine Membran, welches temperaturabhängig den Strömungspfad 8 freigibt, sodass Kondensat durch den Kondensatableiter 2 abgeleitet werden kann.

Die Sensorvorrichtung 10 umfasst einen Sensor 12 und eine Kopplungsbaugruppe 14 zur Verbindung der Sensorvorrichtung 10 mit dem Gehäuse 9 und insbesondere mit einer Kopplungs-Schnittstelle 9a des Gehäuses 9. Die Kopplungsbaugruppe 14 ist form- und/oder kraftschlüssig mit dem Sensor 12 verbunden und dazu eingerichtet ist, eine lösbare, form- und/oder kraftschlüssige Verbindung mit dem Gehäuse 9 bzw. der Kopplungs-Schnittstelle 9a einzugehen, um im montierten Zustand den Körperschall des Gehäuses 9 zu dem Sensor 12 zu leiten.

Ferner umfasst die Kopplungsbaugruppe 14 ein Kopplungsteil 15 und ein lösbar mit dem Kopplungsteil 15 verbindbares Halteteil 16, wobei der Sensor 12 mittels der Kopplungsbaugruppe 14 körperschallleitend mit dem Gehäuse 9 verbunden ist. Somit wird eine körperschallleitende Verbindung zwischen dem Sensor 12 und dem Gehäuse 9 ausgebildet, welche es dem Sensor 12 ermöglicht, den Körperschall des Gehäuses 9 zu detektieren und damit Rückschlüsse auf den Betriebszustand und insbesondere Blockaden und/oder Leckagen im Strömungspfad 8 zuzulassen. Die Kombination des Kopplungsteils 15 und des Halteteils 16 ermöglicht dabei eine Funktionsteilung, wobei sich der zu erfassende Körperschall innerhalb des Kopplungsteils 15 und des Halteteils 16 ausbreitet.

Die Sensorvorrichtung 10 kann auch an beliebiger anderer Position mit dem Gehäuse 9 gekoppelt werden, bevorzugt ist sie allerdings stromabwärts des Verschlussorgans 11 angeordnet.

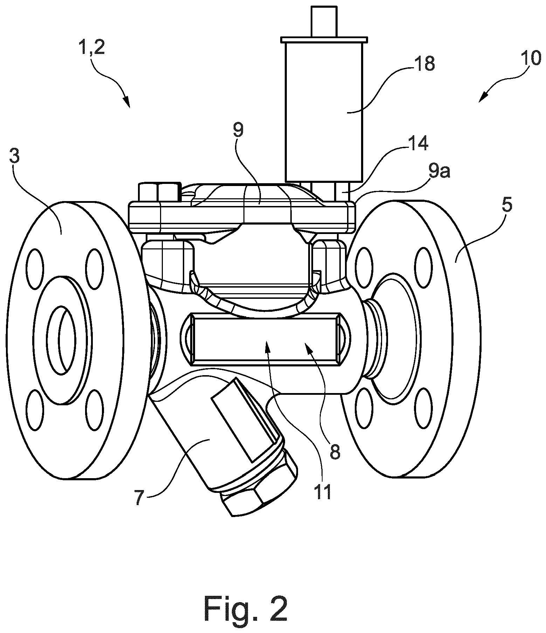

In Fig. 1 wurde die Sensorvorrichtung 10 gemäß einer ersten Ausführungsform gezeigt. Die Regelarmatur 1 gemäß Fig. 2, welche ebenfalls als Kondensatableiter 2 ausgebildet ist, unterscheidet sich von dem zuvor in Fig. 1 gezeigten Kondensatableiter 2 durch die Sensorvorrichtung 10, welche in Fig. 2 in einer zweiten bevorzugten Ausführungsform gezeigt wird. Für gleiche bzw. ähnliche Bauteile wurden identische Bezugszeichen verwendet und es wird auf die vorstehende Beschreibung des in Fig. 1 gezeigten Ausführungsbeispiels Bezug genommen.

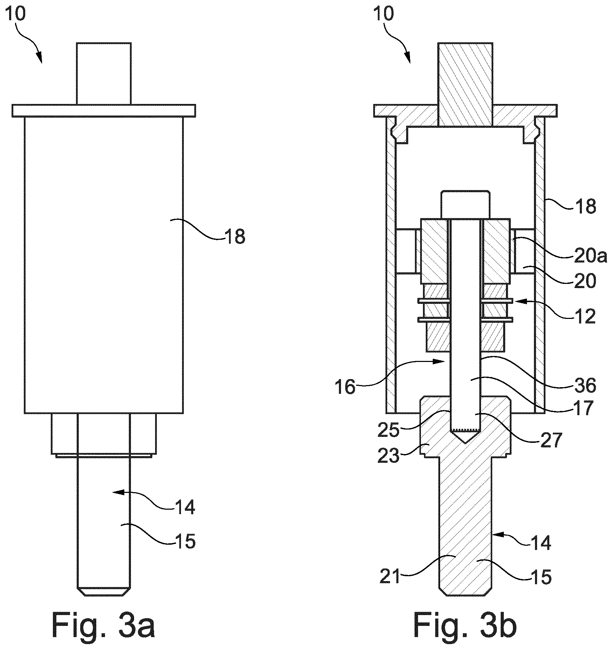

Die Sensorvorrichtung 10 umfasst ein Sensorgehäuse 18, welches mit der Kopplungsbaugruppe 14 gekoppelt ist und den ersten Sensor 12 (vgl. Fig. 3a, 3b) sowie das Halteteil 16 (vgl. Fig. 3a, 3b) in sich aufnimmt. Das Halteteil 16 sowie der Sensor 12 werden somit sicher innerhalb des Sensorgehäuses 18 aufgenommen und gegenüber Umgebungseinflüssen geschützt. Das Sensorgehäuse 18 ist bevorzugt reversibel mit dem Halteteil 16 und/oder dem Sensor 12 und/oder dem Kopplungsteil 15 gekoppelt.

Die Fig. 3a und 3b zeigen die Sensorvorrichtung 10 gemäß Fig. 2 im Detail.

Die Kopplungsbaugruppe 14 umfasst ein als Verbindungsschraube ausgebildetes Kopplungsteil 15 zur Kopplung mit einer Kopplungs-Schnittstelle 9a des Gehäuses 9 (vgl. Fig. 1), wobei das Sensorgehäuse 18 benachbart zu dem Kopplungsteil 15 angeordnet ist. Wie insbesondere Fig. 3b zeigt, umfasst die Kopplungsbaugruppe 14 ein Halteteil 16, welches als eine Schraube 17 mit einem Halteabschnitt 36 ausgebildet ist.

Das als Verbindungsschraube ausgebildete Kopplungsteil 15 umfasst einen Schaftabschnitt 21 und einen Kopfabschnitt 23. In dem Kopfabschnitt 23 ist eine Kopplungs-Aufnahme 25 ausgebildet, in welcher ein als distales Ende des Halteteils 16 ausgebildeter Kopplungsabschnitt 27 aufgenommen ist.

Der Sensor 12 ist ein piezoelektrischer Sensor, welcher ein erstes Piezoelement 28.1 und ein zweites Piezoelement 28.2 umfasst, welche vorliegend als Platten mit einer zylindrischen Bohrung im Zentrum ausgebildet sind. Der Sensor 12 umfasst ferner ein Paar Elektroden 32 zur Bereitstellung eines elektrischen Signals bzw. eines Stroms. Durch die Bohrung wird das als Schraube 17 ausgebildete Halteteil 16 durchgeführt.

Der Sensor 12 umfasst einen Frontleiter 33. Das Halteteil 16 umfasst ein Spannteil 34, welches durch einen Kopfabschnitt der Schraube 17 ausgebildet ist. Der Frontleiter 33 ist als Scheibe ausgebildet, welche eine zentrale Bohrung mit einem Innengewinde aufweist und mit dem Halteabschnitt 36 des als Schraube 17 ausgebildeten Halteteils 16 in Eingriff ist.

Ferner umfasst Sensor 12 eine seismische Masse 31, welche benachbart zu dem Spannteil 34 angeordnet ist und welche vorliegend als Platte mit einer zylindrischen Bohrung im Zentrum ausgebildet ist. Durch die Bohrung wird die Schraube 17 durchgeführt. Das Spannteil 34 liegt zumindest temporär an der seismischen Masse 31 an. Somit kann der Sensor 12, umfassend mindestens ein erstes Piezoelement 28.1 und ein zweites Piezoelement 28.2, sicher zwischen dem Frontleiter 33 und dem Spannteil 34 angeordnet und fixiert werden, wobei die seismische Masse 31 relativ zu dem ersten Piezoelement 28.1 und zweiten Piezoelement 28.2 bewegbar mit der Schraube 17 und insbesondere dem Halteabschnitt 36 in Eingriff ist.

Der Frontleiter 33 ist beabstandet und benachbart zu der Kopplungsbaugruppe 14, insbesondere dem Kopfabschnitt 23 des Kopplungsteils 15 angeordnet. Somit wird zwischen dem Frontleiter 33 und dem Kopfabschnitt 23 des Kopplungsteils 15 ein Hohlraum 37 ausgebildet, welcher den thermischen Isolator bildet. Der Hohlraum 37 beschreibt vorliegend den sich um den Halteabschnitt 36 in radialer Richtung erstreckenden Raum, welcher insbesondere durch die radiale Erstreckung des Kopfabschnittes 23 und des Frontleiters 33 begrenzt wird. Durch den Hohlraum 37 wird die thermische Isolation des Sensors 12 von der Kopplungsbaugruppe 14 und damit dem Gehäuse 9 (vgl. Fig. 1 und 2) erhöht.

Die seismische Masse 31 ist in der gezeigten Ausführungsform mit dem Sensorgehäuse 18 über einen Kopplungsabschnitt 20 des Gehäuses 18 verbunden. Zwischen der seismischen Masse 31 und dem Kopplungsabschnitt 20 ist bevorzugt eine kraftschlüssige und/oder reibschlüssige sowie körperschallleitende Verbindung ausgebildet. Vorzugsweise weist der Kopplungsabschnitt 20 eine zu der seismischen Masse 31 gewandte Kontaktfläche 20a mit einer reibungsfördernden Oberflächenbeschichtung, insbesondere einer Polymerbeschichtung auf. Vorzugsweise ist die Kontaktfläche 20a des Kopplungsabschnitts 20 gummiert.

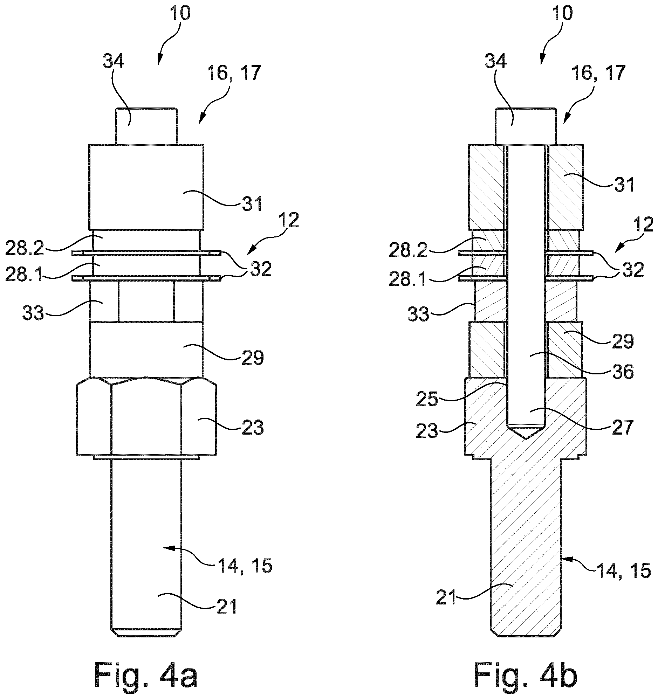

In den Fig. 4a und 4b wird ein weiteres Ausführungsbeispiel der erfindungsgemäßen Sensorvorrichtung 10 gezeigt. Für gleiche bzw. ähnliche Bauteile wurden identische Bezugszeichen verwendet und es wird auf die vorstehende Beschreibung des in Fig. 3a und Fig. 3b gezeigten Ausführungsbeispiels Bezug genommen. Die gezeigte Ausführungsform unterscheidet sich von dem zuvor in Fig. 3a und 3b gezeigten Ausführungsbeispiel zum einen dadurch, dass die Sensorvorrichtung 10 kein Sensorgehäuse 18 (vgl. Fig. 3a und 3b) aufweist. Dieses Sensorgehäuse 18 kann optional bei dem in Fig. 4a und 4b gezeigten Ausführungsbeispiel ergänzt werden.

Ferner unterscheidet sich das in den Fig. 4a und 4b gezeigte Ausführungsbeispiel von dem vorstehenden Ausführungsbeispiel durch einen thermischen Isolator aus einem festen Dämmstoff 29, welcher zwischen dem Frontleiter 33 und dem Kopfabschnitt 23 der Kopplungsbaugruppe 14 angeordnet ist. Der thermische Isolator aus einem festen Dämmstoff 29 weist eine zentrale Bohrung zur Durchführung des Halteabschnitts 36 auf. Der thermische Isolator aus einem festen Dämmstoff 29 wird dabei durch den in der Kopplungs-Aufnahme 25 aufgenommenen Kopplungsabschnitt 27 des als Schraube 17 ausgebildeten Halteteils 16 ausgebildet. Somit kann auf eine weitere Bearbeitung des thermischen Isolators aus einem festen Dämmstoff 29 zur Ausbildung einer kraftschlüssigen Verbindung zwischen dem thermischen Isolator aus einem festen Dämmstoff 29 und der Schraube 17, beispielsweise mittels einer Schraubverbindung, verzichtet werden.

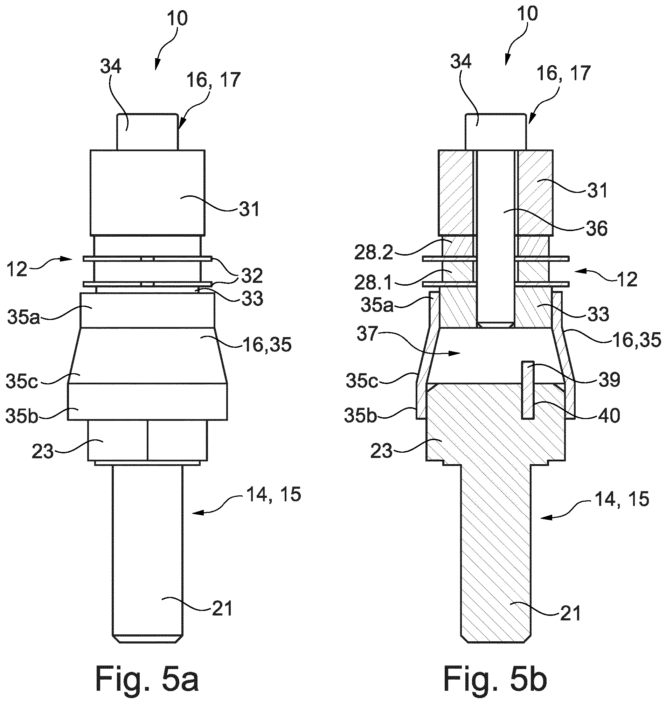

Die Fig. 5a und 5b zeigen ein weiteres Ausführungsbeispiel der erfindungsgemäßen Sensorvorrichtung 10. Für gleiche bzw. ähnliche Bauteile wurden identische Bezugszeichen verwendet und es wird auf die vorstehende Beschreibung der in Fig. 3a und Fig. 3b sowie 4a und 4b gezeigten Ausführungsbeispiele Bezug genommen.

Die Sensorvorrichtung 10 umfasst in bekannter Weise einen Sensor 12, welcher vorliegend ein erster Sensor ist, eine Kopplungsbaugruppe 14, mit einem Kopplungsteil 15 und einem Halteteil 16, welches lösbar mit dem Kopplungsteil 15 gekoppelt ist. Das Halteteil 16 ist als Schraube 17 ausgebildet und weist ein Halteabschnitt 36 und ein Spannteil 34 auf. Der Halteabschnitt 36 ist mit dem Frontleiter 33 in Eingriff, wobei der Kopfabschnitt der Schraube 17 ein Spannteil 34 ausbildet. Die Kopplungsbaugruppe 14 weist ferner ein Verbindungsteil 35 auf, welches vorliegend eine Hülse ist, zur lösbaren Kopplung des Kopplungsteils 15 und des Halteteils 16.

Die Hülse 35 umfasst bevorzugt einen ersten zylindrischen Abschnitt 35a, mit welchem die Hülse 35 an einem äußeren Umfang des Frontleiters 33 anliegt, und einen zweiten zylindrischen Abschnitt 35b, mit welchem die Hülse 35 an dem Kopfabschnitt 23 des Kopplungsteils 15 anliegt, welches vorliegend als Verbindungsschraube ausgebildet ist. Ferner umfasst die Hülse 35 einen sich vom zweiten zylindrischen Bereich 35b zum ersten zylindrischen Bereich 35a verjüngenden Übergangsbereich 35c. Bevorzugt ist die Hülse 35 kraftschlüssig mit dem Frontleiter 33 und dem Kopfabschnitt 23 der Verbindungsschraube 15 gekoppelt. Die Hülse 35 ist dazu ausgebildet, eine körperschallleitende Verbindung zwischen der Kopplungsbaugruppe 14 und insbesondere dem Kopfabschnitt 23 sowie dem Halteteil 16 und insbesondere der seismischen Masse 31 herzustellen. Die körperschallleitende Verbindung zu der seismischen Masse 31 erfolgt vorliegend mittelbar durch den Frontleiter 33 und das Halteteil 16. Der Sensor 12 ist in bekannter Weise als piezoelektrischer Sensor ausgebildet und umfasst vorzugsweise ein erstes Piezoelement 28.1 und ein zweites Piezoelement 28.2. Der Sensor 12 umfasst ferner ein Paar Elektroden 32 zur Bereitstellung eines elektrischen Signals bzw. eines Stroms. Somit wird der Körperschall über die Hülse 35 und das Halteteil 16 hin zu dem ersten Piezoelement 28.1 und dem zweiten Piezoelement 28.2 übertragen.

Ferner ist der Hohlraum 37 zwischen dem Kopfabschnitt 23 und dem Frontleiter 33 ausgebildet. Der Hohlraum 37 wird in radialer Richtung durch die Hülse 35 begrenzt und in axialer Richtung durch den Kopfabschnitt 23 und den Frontleiter 33. Somit wird durch den Hohlraum 37 eine Isolation des Halteteils 16 und insbesondere des Frontleiters 33 gegenüber dem Kopplungsteil 15 bzw. dem Gehäuse 9 (vgl. Fig. 1) sichergestellt. Durch die Vermeidung des Eingriffs des Halteabschnitts 36 und des Kopplungsteils 15, wird die Wärmeleitung weiter reduziert und der Sensor 12 vor den hohen Temperaturen des Gehäuses 9 (vgl. Fig. 1 und 2) geschützt.

Neben dem ersten Sensor 12, welcher als piezoelektrischer Sensor mit dem ersten Piezoelement 28.1 und dem zweiten Piezoelement 28.2 ausgebildet ist, umfasst die Sensorvorrichtung 10 ferner einen zweiten Sensor 39 zur Erfassung der Temperatur der Kopplungsbaugruppe 14. Der zweite Sensor 39 ist somit als Temperatursensor ausgebildet. Der Temperatursensor 39 ist in einer Sensor-Aufnahme 40 aufgenommen, welche bevorzugt in dem Kopfabschnitt 23 des Kopplungsteils 15 ausgebildet ist.

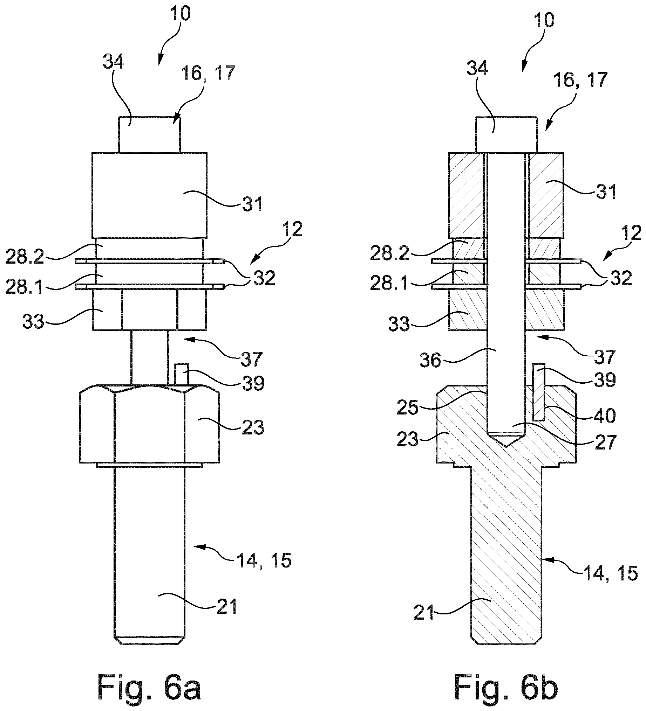

Das in den Fig. 6a und 6b gezeigte Ausführungsbeispiel der erfindungsgemäßen Sensorvorrichtung 10 unterscheidet sich von dem zuvor in den Fig. 3a und 3b gezeigten Ausführungsbeispiel dadurch, dass neben dem ersten Sensor 12 ferner ein zweiter Sensor 39 vorgesehen ist. Für gleiche bzw. ähnliche Bauteile wurden identische Bezugszeichen verwendet und es wird auf die vorstehende Beschreibung des in Fig. 3a und Fig. 3b gezeigten Ausführungsbeispiels Bezug genommen.

Der erste Sensor 12 ist in bekannter Weise als piezoelektrischer Sensor ausgebildet und umfasst ein erstes Piezoelement 28.1 und ein zweites Piezoelement 28.2. Der Sensor 12 umfasst ferner ein Paar Elektroden 32 zur Bereitstellung eines elektrischen Signals bzw. eines Stroms. Der zweite Sensor 39 ist ein Temperatursensor, welcher in einer Sensor-Aufnahme 40 aufgenommen ist. Der zweite Sensor 39 ist dazu eingerichtet, durch Erfassen einer Temperaturänderung eine Blockade des Strömungspfades 8 anzuzeigen. Die Sensor-Aufnahme 40 ist in der gezeigten Ausführungsform im Kopfabschnitt 23 des Kopplungsteils 15 ausgebildet. Alternativ kann die Sensor-Aufnahme auch in dem Halteteil 16 angeordnet sein.

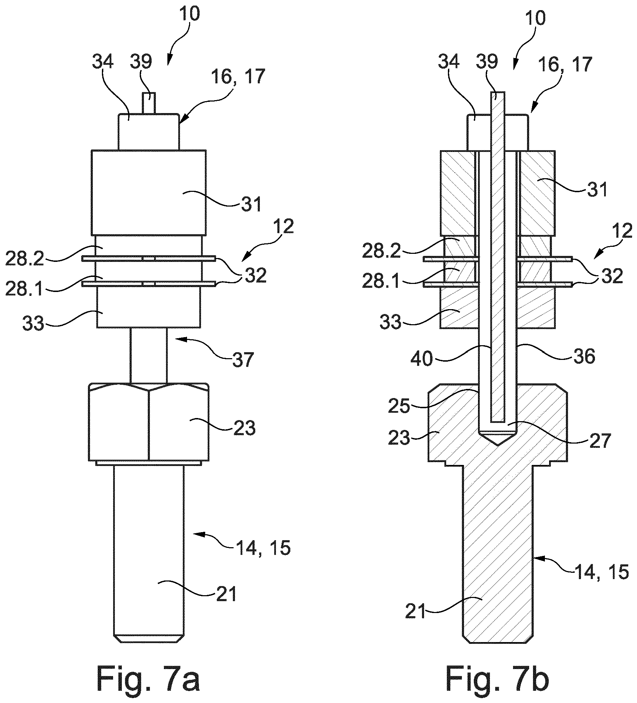

Das in den Fig. 7a und 7b gezeigte Ausführungsbeispiel unterscheidet sich von dem vorstehend in den Fig. 6a und 6b bzw. 3a und 3b gezeigten Ausführungsbeispiel dadurch, dass die Sensorvorrichtung 10 neben dem ersten Sensor 12 einen zweiten Sensor 39 aufweist, welcher bevorzugt als Temperatursensor ausgebildet ist. Für gleiche bzw. ähnliche Bauteile wurden identische Bezugszeichen verwendet und es wird auf die vorstehende Beschreibung der in Fig. 6a und Fig. 6b bzw. Fig. 3a und Fig. 3b gezeigten Ausführungsbeispiele Bezug genommen.

Bei dem ersten Sensor 12 handelt es sich bevorzugt in bekannter Weise um einen piezoelektrischen Sensor mit einem ersten Piezoelement 28.1 und einem zweiten Piezoelement 28.2. Der Sensor 12 umfasst ferner ein Paar Elektroden 32 zur Bereitstellung eines elektrischen Signals bzw. eines Stroms, welcher sich in Abhängigkeit des Körperschalls in dem Gehäuse 9 (vgl. Fig. 1) ändert.

Der zweite Sensor 39 ist in einer Sensor-Aufnahme 40 aufgenommen. Die Sensor-Aufnahme 40 ist in dem Halteteil 16 ausgebildet. Der zweite Sensor 39 ist zur Erfassung der Temperatur des Halteteils 16 ausgebildet, um eine Blockade in dem Kondensatableiter 2 zu erkennen. Das Halteteil 16 ist dabei als Schraube 17 ausgebildet mit einem Kopfabschnitt, welcher ein Spannteil 34 ausbildet und einem Halteabschnitt 36, wobei sich die Sensor-Aufnahme 40 von dem Spannteil 34 durch den Halteabschnitt 36 bis hin zu dem Kopplungsabschnitt 27 erstreckt, welcher in bekannter Weise mit einer korrespondierenden Kopplungs-Aufnahme 25 des Kopplungsteils 15 in Eingriff ist. Durch die Erstreckung des zweiten Sensors 39 in den Kopplungsabschnitt 27, ist neben der Erfassung der Temperatur des Halteteils 16 auch eine schnelle Erfassung von Temperaturunterschieden des Kopplungsteils 15 und des Gehäuses 9 (vgl. Fig. 1 und 2) möglich. Somit erfasst der zweite Sensor 39 indirekt auch Temperaturschwankungen des Kopplungsteils 15 durch die zumindest abschnittsweise Aufnahme des Kopplungsabschnitts 27 in dem Kopfabschnitt 23.

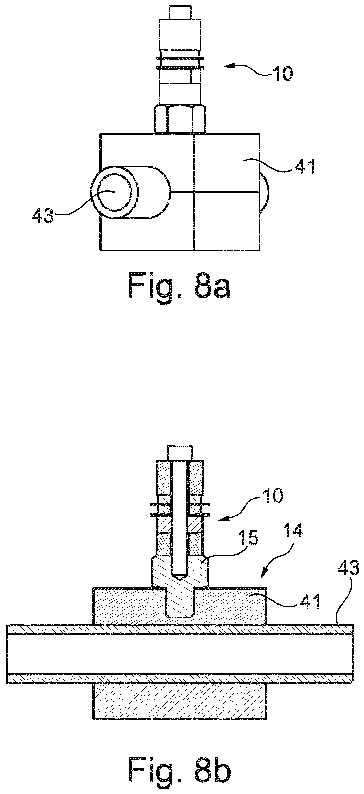

Die Fig. 8a und 8b zeigen ein weiteres Ausführungsbeispiel der erfindungsgemäßen Sensorvorrichtung 10. Das gezeigte Ausführungsbeispiel unterscheidet sich von dem vorstehend in den Fig. 4a und 4b gezeigten Ausführungsbeispiel dadurch, dass die Regelarmatur ein Rohrabschnitt 43 ist und durch die Ausbildung der Kopplungsbaugruppe 14. Für gleiche bzw. ähnliche Bauteile wurden identische Bezugszeichen verwendet und es wird auf die vorstehende Beschreibung des in Fig. 4a und Fig. 4b gezeigten Ausführungsbeispiels Bezug genommen.

Die Kopplungsbaugruppe 14 ist zweiteilig ausgebildet und umfasst ein Kopplungteil 15, welches als Verbindungsschraube ausgebildet ist, und ein Halteteil 41, welches als Rohrschelle ausgebildet ist. Das Kopplungteil 15 ist mit einer Aufnahme, vorzugsweise einer Gewindebohrung 42 der Rohrschelle 41 lösbar in Eingriff, sodass eine körperschallleitende Verbindung zwischen dem zweiten als Rohrschelle 41 ausgebildeten Halteteil und dem als Verbindungsschraube 15 ausgebildeten Kopplungsteil sichergestellt ist. Die Sensorvorrichtung 10 ist mittels der Kopplungsbaugruppe 14 in bekannter Weise dazu eingerichtet, eine körperschallleitende Verbindung mit einer Regelarmatur und insbesondere einem Rohrabschnitt 43 einzugehen. Somit können Leckagen innerhalb des Rohrabschnitts 43 oder der Regelarmatur anhand der Veränderung des Körperschalls mittels der Sensorvorrichtung 10 zuverlässig erfasst werden. Es soll verstanden werden, dass die Sensorvorrichtung 10 in dem gezeigten Ausführungsbeispiel zur körperschallleitenden Verbindung mit einer beliebigen Rohrleitung eines Rohrleitungssystems eingerichtet ist, um den Betriebszustand zu überwachen und eine Leckage zu erkennen.

Eine entsprechende Ausbildung der Kopplungsbaugruppe 14 ist erfindungsgemäß mit sämtlichen der in den Fig. 2a bis 7b gezeigten Ausführungsvarianten kombinierbar, sodass beispielsweise mittels eines zweiten Sensors die Temperatur der Kopplungsbaugruppe 14 überwacht wird, um eine Blockade des Strömungspfades des Rohrabschnitts 43 zu erkennen.

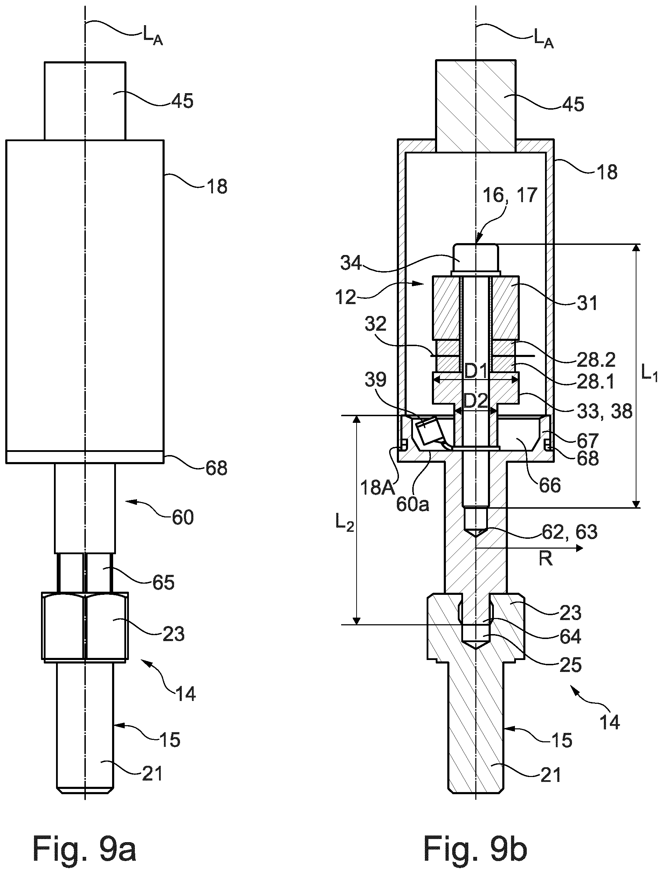

Fig. 9a und Fig. 9b zeigen eine weitere Ausführungsform der Sensorvorrichtung 10. Die Sensorvorrichtung 10 umfasst in bekannter Weise eine Kopplungsbaugruppe 14 zur Kopplung mit dem Gehäuse 9 (vgl. Fig. 1). Weiterhin umfasst die Sensorvorrichtung 10 einen ersten Sensor 12 zur Erfassung von Körperschall und einen zweiten Sensor 39 zur Detektion der Temperatur der Kopplungsbaugruppe 14 und/oder des Gehäuses 9 (vgl. Fig. 1). Die Kopplungsbaugruppe 14 ist formschlüssig mit dem ersten Sensor 12 verbunden und dazu eingerichtet, eine lösbare, formschlüssige Verbindung mit dem Gehäuse 9 (vgl. Fig. 1) einzugehen, um im montierten Zustand den Körperschall des Gehäuses 9 zu dem Sensor 12 zu leiten. Der Sensor 12 ist vorliegend ein piezoelektrischer Sensor, wobei auf die Beschreibung der vorhergehenden Ausführungsbeispiele verwiesen wird.

Die Kopplungsbaugruppe 14 umfasst in bekannter Weise ein Kopplungsteil 15, welches mit der korrespondierenden Kopplungs-Schnittstelle 9a (vgl. Fig. 1) des Gehäuses 9 lösbar in Eingriff bringbar ist. Weiterhin umfasst die Kopplungsbaugruppe 14 ein mittelbar und körperschallleitend mit dem Gehäuse 9 verbundenes Halteteil 16, welches vorliegend formschlüssig mit dem ersten Sensor 12 in Eingriff ist.

Das Kopplungsteil 15 ist als eine erste Schraube 15 mit einem ersten Schaftabschnitt 21 und einem ersten Kopfabschnitt 23 ausgebildet. Das Halteteil 16 ist als eine zweite Schraube 17 mit einem zweiten Kopfabschnitt 34 und einem zweiten Schaftabschnitt 36 ausgebildet. Der zweite Kopfabschnitt 34 bildet zugleich ein Spannteil zum Vorspannen des ersten Sensors 12 aus und der zweite Schaftabschnitt 36 bildet einen Halteabschnitt aus, der dazu eingerichtet ist, mit einem Adapter 60 der Kopplungsbaugruppe 14 in Eingriff zu kommen.

Der Adapter 60 umfasst eine Montageschnittstelle 62, die als Gewindebohrung 63 ausgebildet ist. Der als Halteabschnitt ausgebildete zweite Schaftabschnitt 36 ist dazu eingerichtet, mit der Gewindebohrung 63 in Eingriff zu kommen. Die Gewindebohrung 63 erstreckt sich entlang einer Längsachse $L_A$ und verläuft bevorzugt koaxial zu der Kopplungs-Aufnahme 25 des Kopplungsteils 15.

Das Halteteil 16 weist eine erste Länge L1 in Richtung der Längsachse $L_A$ auf. Die Adapter-Montageschnittstelle 62, insbesondere die Gewindebohrung 63, weist dabei mindestens 1/3 der Länge L1 des Halteteils 16 auf. Somit ist die Gewindebohrung 63 des Adapters 60 dazu eingerichtet, entlang von mindestens 1/3 der Länge L1 des Halteteils 16 mit diesem in Eingriff zu sein. Somit ist eine ausreichende Kraftübertragung zwischen Halteteil 16 und Adapter 60 gewährleistet.

Der Adapter 60 weist eine Anlagefläche 60a auf, die sich in einer radialen Richtung R erstreckt. Der Frontleiter 33 des ersten Sensors 12 ist dabei als Hülse 38 ausgebildet mit einem ersten Durchmesser D1, der an das erste Piezoelement 28.1 angrenzt, und einem zweiten Durchmesser D2, der an die Anlagefläche 60a angrenzt. Der erste Durchmesser D1 und der zweite Durchmesser D2 beziehen sich dabei jeweils auf die Außendurchmesser der Hülse 38. Der Durchmesser D2 ist dabei größer als der Durchmesser der Gewindebohrung 63, sodass der Frontleiter 33 auf der Anlagefläche 60a aufliegt, wobei das als zweite Schraube 17 ausgebildete Halteteil 16 mit dem Halteabschnitt 36 in Gewindeeingriff mit der Gewindebohrung 63 ist. Das erste und das zweite Piezoelement 28.1, 28.2 sind dabei fest zwischen dem Schraubenkopf 34 und dem Frontleiter 33 eingespannt.

Der Adapter 60 weist ferner einen Kopplungsabschnitt 64 auf, der dazu eingerichtet ist, mit der Kopplungs-Aufnahme 25 des Kopplungsteils 15 in Eingriff zu kommen. Der Kopplungsabschnitt 64 ist bevorzugt dazu ausgebildet, durch eine Schraubbewegung mit der Kopplungs-Aufnahme 25 in Eingriff zu kommen, wobei sich der Kopplungsabschnitt 64 plastisch verformt. Somit wird eine feste Verbindung zwischen dem Adapter 60 und dem Kopplungteil 15 geschaffen.

Wie insbesondere Fig. 9a zeigt, weist der Adapter 60 einen Werkzeugansatz 65 auf, der dazu eingerichtet ist, mit einem korrespondierenden Werkzeug in Eingriff zu kommen, derart, dass der Adapter 60 zum Ineingriffbringen des Kopplungsabschnitts 64 mit der Kopplungs-Aufnahme 25 durch eine Rotation um die Längsachse $L_A$ in Eingriff gelangt.

Ferner weist der Adapter 60 einen Aufnahmeraum 66 auf, welcher durch die sich in radialer Richtung R erstreckende Anlagefläche 60a und eine diese in radialer Richtung R umgebende Wandung 67 gebildet wird. Dieser Aufnahmeraum 66 ist bevorzugt dazu eingerichtet, den zweiten Sensor 39 zumindest abschnittsweise aufzunehmen.

An der äußeren Umfangsfläche der Wandung 67 ist ferner eine Gehäuse-Schnittstelle 68 ausgebildet, die dazu eingerichtet ist, mit einer korrespondierenden Montage-Schnittstelle 18A des Sensorgehäuses 18 in Eingriff zu kommen.

Ein oberer Abschnitt des zweiten Sensors 39 erstreckt sich in den Aufnahmeraum 66 und wird somit vom Sensorgehäuse 18 umgeben. Somit ist der zweite Sensor 39 geschützt und kann mit einem Sender 45 innerhalb des Sensorgehäuses 18 verbunden werden.

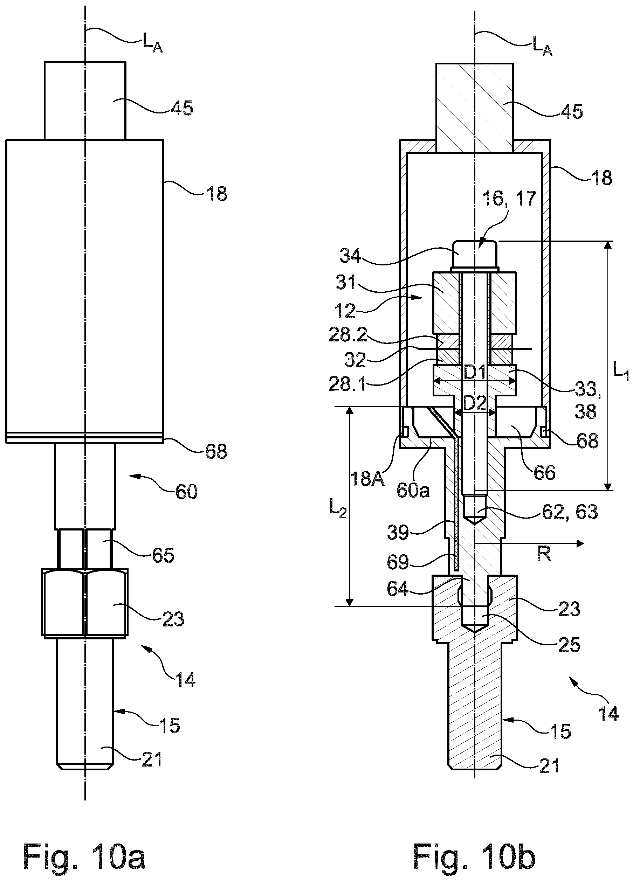

Die Fig. 10a und 10b zeigen eine weitere Ausführungsform der erfindungsgemäßen Sensorvorrichtung 10. Es wird auf die Beschreibung des in den Fig. 9a und 9b gezeigten Ausführungsbeispiels verwiesen, wobei gleiche bzw. ähnliche Bauteile identische Bezugszeichen aufweisen. Zur Vermeidung von Wiederholungen wird lediglich auf Unterschiede der beiden Ausführungsformen eingegangen.

Der Adapter 60 erstreckt sich entlang der Längsachse $L_A$ mit einer Adapterlänge L2. In dem in Fig. 10a und 10b gezeigten Ausführungsbeispiel weist der Adapter 60 eine Sensor-Aufnahme 69 auf, welche sich bevorzugt entlang mindestens 3/4 der Adapterlänge L2 erstreckt. Hierbei erstreckt sich die Sensor-Aufnahme 69 somit bis an einen an den Kopfabschnitt 23 des Kopplungsteils 15 angrenzenden Bereich. Die Sensor-Aufnahme 69 ist dabei dazu eingerichtet, einen zweiten Sensor 39 aufzunehmen, der vorliegend als Temperatursensor ausgebildet ist.

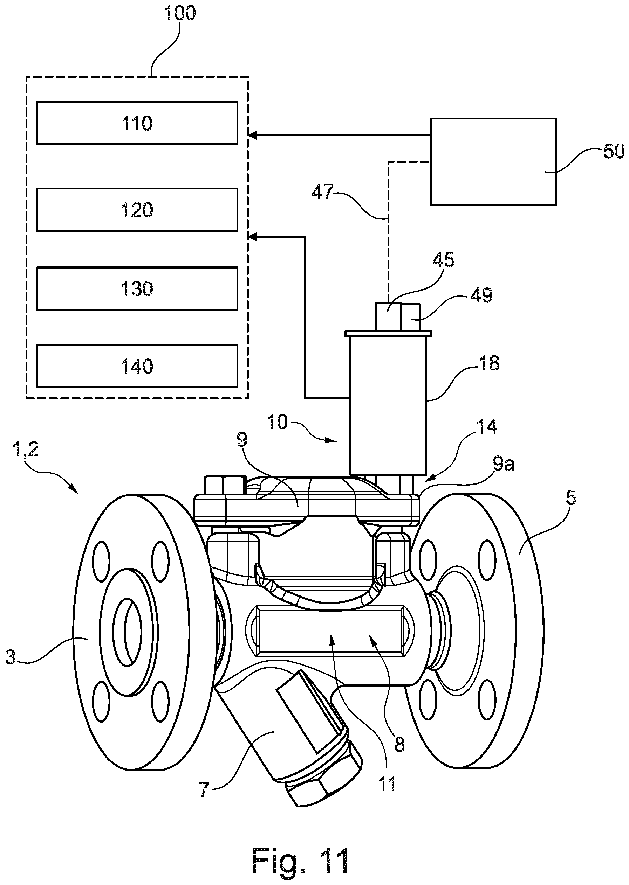

Die Sensorvorrichtung 10 weist auch vorliegend einen Sender 45 auf, welcher zur Übertragung eines Sensorsignals des ersten Sensors 12 und/oder des zweiten Sensors 39 an eine dem Kondensatableiter 2 zugeordnete Auswerteeinheit 50 (vgl. Fig. 11) mittels einer Signalverbindung 47 (vgl. Fig. 11) eingerichtet ist.

Fig. 11 zeigt eine erfindungsgemäße Regelarmatur 1, welche als Kondensatableiter 2 ausgebildet ist. Der Kondensatableiter 2 umfasst in bekannter Weise einen Einlassflansch 3, einen Auslassflansch 5, eine Kondensatumlenkung mit einem Schutzsieb 7 sowie einen zwischen dem Einlassflansch 3 und dem Auslassflansch 5 ausgebildeten Strömungspfad 8 für Fluid, welcher sich in einem Gehäuse 9 erstreckt.

In dem Strömungspfad 8 ist innerhalb des Gehäuses ein nicht näher gezeigtes Verschlussorgan 11 angeordnet ist, welches dazu eingerichtet ist, den Strömungspfad 8 selektiv zu sperren bzw. freizugeben.

Die Sensorvorrichtung 10 umfasst einen Sensor 12 und eine Kopplungsbaugruppe 14 zur Verbindung der Sensorvorrichtung 10 mit dem Gehäuse 9 und insbesondere mit einer Kopplungs-Schnittstelle 9a des Gehäuses 9. Die Kopplungsbaugruppe 14 ist form- und/oder kraftschlüssig mit dem Sensor 12 verbunden und dazu eingerichtet ist, eine lösbare, form- und/oder kraftschlüssige Verbindung mit dem Gehäuse 9 bzw. der Kopplungs-Schnittstelle 9a einzugehen, um im montierten Zustand den Körperschall des Gehäuses 9 zu dem Sensor 12 zu leiten.

Mit dem Gehäuse 9 ist eine Sensorvorrichtung 10 körperschalleitend verbunden (siehe Fig. 2a bis 10b). Die Sensorvorrichtung 10 umfasst ein Sensorgehäuse 18. An dem Sensorgehäuse 18 ist ein Sender 45 ausgebildet, welcher signalleitend mit dem ersten Sensor 12 und vorzugsweise einem vorhandenen zweiten Sensor 39 verbunden ist. Der zweite Sensor 39 kann zur Detektion vor einer Temperatur ausgebildet sein und wärmeleitend mit dem Gehäuse 9 auf die zuvor beschriebene Weise verbunden sein.

Alternativ kann in allen der in den Fig. 2a bis 10b gezeigten Ausführungsbeispielen der Sensorvorrichtung 10 statt eines Senders 45 zur Signalübertragung auch eine kabelführende Verbindung vorgesehen sein (nicht gezeigt). Alternativ kann auch ein Stecker bzw. eine Buchse für einen Sender bzw. eine Auswerteeinheit an dem Sensorgehäuse 18 ausgebildet sein (nicht gezeigt).

Der Sender 45 ist dazu eingerichtet, mittels einer vorliegend kabellosen Signalverbindung 47 Sensorsignale an eine Auswerteeinheit 50 zu übermitteln. Die Auswerteeinheit 50 ist der jeweiligen Regelarmatur 1 zugeordnet. Zur Energieversorgung des Senders 45 und vorzugsweise eines oder beider der Sensoren 12, 39 ist ein Energiespeicher 49 vorgesehen. Statt eines Energiespeichers 49, für einen autarken Betrieb der Sensorvorrichtung 10, kann erfindungsgemäß auch eine elektrische Leitung zu einem Versorger vorgesehen sein.

Alternativ bevorzugt kann es sich bei der Auswerteeinheit 50 um eine Auswerteeinheit zur Steuerung einer Anlage, welcher die Regelarmatur 1 zugeordnet ist, handeln. Alternativ kann es sich bei der Auswerteeinheit 50 um eine Auswerteeinheit der jeweiligen Regelarmatur 1 handeln. Diese kann bevorzugt beabstandet zu der Regelarmatur 1 angeordnet sein, oder aber dem Gehäuse 9 der Regelarmatur 1 zugeordnet sein.

Gemäß bevorzugten, vorliegend nicht im Detail gezeigten Ausführungsbeispielen können am Gehäuse 9 ferner Alarmmittel vorgesehen sein, welche dazu eingerichtet sind, in Abhängigkeit der von der Auswerteeinheit 50 ausgewerteten Sensorsignale und der Erfassung einer Blockade und/oder Leckage, ein Alarmsignal bereitzustellen, welches optisch und/oder akustisch ist.

Eine Blockade und/oder Leckage in dem Strömungspfad 8 kann insbesondere im Betrieb durch ein Verfahren zum Erfassen einer Blockade festgestellt werden, welches die Schritte umfasst:

- Bereitstellen einer Sensorvorrichtung 10,
- körperschallleitendes Verbinden der Sensorvorrichtung 10 mit einem Gehäuse 9 mittels einer Kopplungsbaugruppe 14,
- Leiten des Körperschalls mittels der Kopplungsbaugruppe 14 zu mindestens einem Sensor 12, 39 (nicht gezeigt, vgl. Fig. 3a bis 8b),

und ferner die folgenden Schritte, welche durch den ersten Sensoren 12 und der Auswerteeinheit 50 ausgeführt werden:

- Detektieren 110 in Schritt S1 von Körperschall mittels des ersten Sensors 12,
- Bereitstellen 120 in Schritt S2 von mindestens einem Sensorsignal durch den ersten Sensor 12,
- Senden 130 in Schritt S3 des Sensorsignals an eine Auswerteeinheit 50 mittels eines Senders 45, und
- Auswerten 140 In Schritt S4 des Sensorsignals des ersten Sensors 12 mittels der Auswerteeinheit 50.

Es ist dabei bevorzugt, dass in Schritt S2 ferner ein Sensorsignal des zweiten Sensors 39, welches ein Temperatursignal ist, bereitgestellt wird und dass dieses Sensorsignal in Schritt S4 gemeinsam mit dem Sensorsignal des ersten Sensors 12 ausgewertet wird, um den Betriebszustand zu überwachen und insbesondere eine Blockade und/oder Leckage zu erkennen.

Einige Ausführungsformen sind in den folgenden Aspekten erläutert:

1. Kondensatableiter (2) zur Regelung des Durchflusses von Fluiden, insbesondere Kondensatableiter (2) zum Ableiten von flüssigem Kondensat, mit

- einem Gehäuse (9) mit einem Einlassflansch (3) und einem Auslassflansch (5),
- einem zwischen dem Einlassflansch (3) und dem Auslassflansch (5) ausgebildeten Strömungspfad (8),
- einem im Strömungspfad (8) angeordneten Verschlussorgan (11), welches dazu eingerichtet ist, den Strömungspfad (8) selektiv sperren bzw. freizugeben, und
- einer an dem Gehäuse (9) befestigten Sensorvorrichtung (10) zum Überwachen des Betriebszustands des Kondensatableiters (2),

wobei Sensorvorrichtung (10) eine Kopplungsbaugruppe (14) zur Kopplung mit dem Gehäuse (9) sowie einen Sensor (12, 39) zur Erfassung von Körperschall und/oder zur Detektion einer Temperatur der Kopplungsbaugruppe (14) und/oder des Gehäuses (9) aufweist,

dadurch gekennzeichnet, dass die Sensorvorrichtung (10) stromabwärts des Verschlussorgans (11) angeordnet und dazu eingerichtet ist, mindestens eines der folgenden zu erkennen:

eine Leckage des Kondensatableiters (2) durch Erfassen des Körperschalls der Kopplungsbaugruppe (14) und/oder des Gehäuses (9),
eine Blockade des Strömungspfades (8) durch Erfassen der Temperatur der Kopplungsbaugruppe (14) und/oder des Gehäuses (9).

2. Kondensatableiter (2) nach Aspekt 1,
dadurch gekennzeichnet, dass die Kopplungsbaugruppe (14) form- und/oder kraftschlüssig mit dem Sensor (12) verbunden und dazu eingerichtet ist, eine lösbare, form- und/oder kraftschlüssige Verbindung mit dem Gehäuse (9) einzugehen, um im montierten Zustand den Körperschall und/oder die Temperatur des Gehäuses (9) zu dem Sensor (12, 39) zu leiten.

3. Kondensatableiter (2) nach einem der vorstehenden Aspekte,
dadurch gekennzeichnet, dass die Kopplungsbaugruppe (14) ein Kopplungsteil (15) aufweist, welches mit einer korrespondierenden Kopplungs-Schnittstelle (9a) des Gehäuses (9) lösbar in Eingriff bringbar ist.

4. Kondensatableiter (2) nach Aspekt 3,
dadurch gekennzeichnet, dass die Kopplungsbaugruppe (14) ein mittelbar und körperschallleitend mit dem Gehäuse (9) verbundenes Halteteil (16, 41) aufweist, welches zur form- und/oder kraftschlüssigen Verbindung mit dem Sensor (12, 39) und zur zumindest mittelbaren Verbindung mit dem Kopplungsteil (15) eingerichtet ist.

5. Kondensatableiter (2) nach dem Oberbegriff von Aspekt 1 und/oder einem der vorstehenden Aspekte,
dadurch gekennzeichnet, dass die Kopplungsbaugruppe (14) ein bzw. das Kopplungsteil (15), welches zur lösbaren Verbindung mit dem Gehäuse (9) eingerichtet ist, und einen Adapter (60) aufweist, der dazu eingerichtet ist, den Sensor (12, 39) körperschall- und/oder temperaturleitend mit dem Kopplungsteil (15) zu verbinden.

6. Kondensatableiter (2) nach Aspekt 5,
dadurch gekennzeichnet, dass die Kopplungsbaugruppe (14) ferner ein bzw. das mit dem Sensor (12, 39) gekoppelte Halteteil (16) aufweist, und der Adapter (60) zur form- und/oder kraftschlüssigen Verbindung mit dem Halteteil (16) eingerichtet ist.

7. Kondensatableiter (2) nach Aspekt 6,
dadurch gekennzeichnet, dass das Kopplungsteil (15) und das Halteteil (16) einen metallischen Werkstoff aufweisen und der Adapter (60) aus einem nicht-metallischen Werkstoff, insbesondere einer technischen Keramik und/oder einem Polymer, ausgebildet ist.

8. Kondensatableiter (2) nach Aspekt 6 oder 7,
dadurch gekennzeichnet, dass das Halteteil (16) sich entlang einer Längsachse ($A_L$) mit einer Länge ($L1$) erstreckt und der Adapter (60) eine Adapter-Montageschnittstelle (62) aufweist, insbesondere eine Gewindebohrung (63) oder ein Außengewinde, die dazu eingerichtet ist, mit dem Halteteil (16) entlang von mindestens 1/3 der Länge ($L1$) des Halteteils (16,41) in Eingriff zu sein.

9. Kondensatableiter (2) nach einem der Aspekte 5 bis 8,

dadurch gekennzeichnet, dass das Kopplungsteil (15) als eine erste Schraube (15) mit einem ersten Schaftabschnitt (21) und einem ersten Kopfabschnitt (23) ausgebildet ist, und/oder das Halteteil (16) als eine zweite Schraube (17) mit einem zweiten Schaftabschnitt (36) und einem zweiten Kopfabschnitt (34) ausgebildet ist, wobei der Adapter (60) dazu eingerichtet ist, vorzugsweise lösbar, mit dem ersten Kopfabschnitt (23) und dem zweiten Schaftabschnitt (36) in Eingriff zu sein, und/oder das Kopplungsteil (15) eine Kopplungs-Aufnahme (25) und das Halteteil (16) und/oder der Adapter (60) einen korrespondierenden Kopplungsabschnitt (27, 64) aufweist, wobei die Kopplungs-Aufnahme (25) lösbar mit dem Kopplungsabschnitt (27, 64) in Eingriff bringbar ist.

10. Kondensatableiter (2) nach einem der Aspekte 5 bis 9,

dadurch gekennzeichnet, dass der Adapter (60) einen Aufnahmeraum (66) aufweist, der dazu eingerichtet ist, zumindest einen Abschnitt des Sensors aufzunehmen, und/oder die Sensorvorrichtung (10) ferner ein Sensorgehäuse (18) mit Kopplungsabschnitten (20) und der Adapter (60) eine korrespondierende Gehäuse-Schnittstelle (68) aufweist, die zur lösbaren Kopplung mit den Kopplungsabschnitten (20) eingerichtet ist, wobei die Gehäuse-Schnittstelle (68) vorzugsweise durch eine den Aufnahmeraum (66) in radialer Richtung ($R$) begrenzende Wandung (67) gebildet ist.

11. Kondensatableiter (2) nach einem der Aspekte 5 bis 10,
dadurch gekennzeichnet, dass der Adapter (60) sich entlang einer bzw. der Längsachse ($A_L$) mit einer Adapterlänge ($L2$) erstreckt und eine Sensor-Aufnahme (69) aufweist, welche sich vorzugsweise entlang mindestens ¾ der Adapterlänge ($L2$) erstreckt.

12. Kondensatableiter (2) nach einem der vorstehenden Aspekte,
dadurch gekennzeichnet, dass der Sensor (12) ein piezoelektrischer Sensor ist, umfassend:

- mindestens ein erstes Piezoelement (28.1) und ein zweites Piezoelement (28.2),
- ein Paar Elektroden (32),
- eine seismische Masse (31), welche dazu eingerichtet ist, sich in Abhängigkeit des von dem Gehäuse (9) übertragenen Körperschalls relativ zu dem ersten Piezoelement (28.1) und/oder dem zweiten Piezoelement (28.2) zu bewegen, und
- einen zu der seismischen Masse (31) beabstandeten Frontleiter (33), welcher mit der Kopplungsbaugruppe (14) gekoppelt und dazu eingerichtet ist, das erste Piezoelement (28.1) und das zweite Piezoelement (28.2) relativ zu der seismischen Masse (31) anzuordnen,

wobei das Halteteil (16, 41) vorzugsweise zur form- und/oder kraftschlüssigen Verbindung der seismischen Masse (31) und des Frontleiters (33) eingerichtet ist, derart, dass das erste Piezoelement (28.1) und das zweite Piezoelement (28.2) zwischen der seismischen Masse (31) und dem Frontleiter (33) aufgenommen sind, und die seismische Masse (31) bewegbar mit dem Halteteil (16, 41) in Eingriff ist, wobei das Halteteil (16, 41) dazu eingerichtet ist, durch Leiten des Körperschalls von dem Gehäuse (9) eine mechanische Schwingung der seismischen Masse (31) anzuregen, sodass die seismische Masse (31) relativ zu dem ersten Piezoelement (28.1) und/oder dem zweiten Piezoelement (28.2) schwingt.

13. Kondensatableiter (2) nach Aspekt 12,

dadurch gekennzeichnet, dass der Frontleiter (33) benachbart und beabstandet zu dem Kopplungsteil (15) und/oder dem Adapter angeordnet ist, sodass ein Hohlraum (37) zwischen dem Frontleiter (33) und der Kopplungsbaugruppe (14) ausgebildet wird, welcher den thermischen Isolator bildet, oder der Frontleiter (33) als eine Hülse (38) ausgebildet ist, und einen ersten Außendurchmesser (D1) angrenzend an das erste Piezoelement (28.1) und einen zweiten Außendurchmesser (D2) angrenzend an die Kopplungsbaugruppe (14), insbesondere das Kopplungsteil (15) oder den Adapter (60), aufweist, der kleiner als der erste Außendurchmesser (D1) und zur Anlage an einer korrespondierenden Anlagefläche (15a) des Kopplungsteils (15) oder an einer korrespondierenden Anlagefläche (60a) des Adapters (60) eingerichtet ist, und/oder die Kopplungsbaugruppe (14) einen thermischen Isolator (29, 37) aufweist, der dazu eingerichtet ist, die Wärmeübertragung von dem Gehäuse (9) zu dem Sensor (12) zu reduzieren.

14. Kondensatableiter (2) nach einem der vorstehenden Aspekte,

dadurch gekennzeichnet, dass der Sensor (12, 39) ein erster Sensor (12) ist, und die Sensorvorrichtung (10) ferner mindestens einen zweiten Sensor (39) zur Detektion der Temperatur der Kopplungsbaugruppe (14) und/oder des Gehäuses (9) aufweist, und die Sensorvorrichtung (10) dazu eingerichtet ist, durch Erfassen der Temperatur der Kopplungsbaugruppe (14) und/oder des Gehäuses (9) mittels des zweiten Sensors (39), eine Blockade des Strömungspfades (8) zu erkennen, und/oder die Kopplungsbaugruppe (14) eine Sensor-Aufnahme (40) für den Sensor (12, 39), insbesondere den zweiten Sensor (39), aufweist.

15. Kondensatableiter (2) nach dem Oberbegriff von Aspekt 1 und/oder mindestens einem der vorstehenden Aspekte, dadurch gekennzeichnet, dass die Kopplungsbaugruppe (14) umfasst:

- ein bzw. das Kopplungsteil (15), welches mit einer korrespondierenden Kopplungs-Schnittstelle (9a) des Gehäuses (9) lösbar in Eingriff bringbar ist,
- ein bzw. das mittelbar und körperschallleitend mit dem Gehäuse (9) verbundenes Halteteil (16, 41), welches zur form- und/oder kraftschlüssigen Verbindung mit einem ersten Sensor (12, 39) und zur zumindest mittelbaren Verbindung mit dem Kopplungsteil (15) eingerichtet ist, und
- eine Sensor-Aufnahme (40), die dem Halteteil (16) zugeordnet und zur Aufnahme eines zweiten Sensors (39) zur Detektion der Temperatur eingerichtet ist.

16. Kondensatableiter (2) nach einem der vorstehenden Aspekte,

dadurch gekennzeichnet, dass die Sensorvorrichtung (10) einen Sender (45) aufweist, welcher zur Übertragung eines Sensorsignals des Sensors (12, 39) mittels einer Signalverbindung (47) an eine dem Kondensatableiter (2) zugeordnete Auswerteeinheit (50) eingerichtet ist, wobei die Auswerteeinheit (50) zur Auswertung des Sensorsignals des Sensors (12, 39) eingerichtet ist, um den Betriebszustand zu überwachen und insbesondere eine Blockade und/oder Leckage zu erkennen, wobei die Signalverbindung (47) vorzugsweise eine kabellose Signalverbindung ist und die Sensorvorrichtung (10) ferner einen Energiespeicher (49) aufweist.

17. Sensorvorrichtung (10) zum Überwachen des Betriebszustands einer Regelarmatur (1), insbesondere eines Kondensatableiters (2) nach einem der Aspekte 1 bis 16, umfassend:

- eine Kopplungsbaugruppe (14) zur Kopplung mit dem Gehäuse (9), und
- einen Sensor (12, 39) zur Erfassung von Körperschall und/oder zur Detektion einer Temperatur der Kopplungsbaugruppe (14) und/oder des Gehäuses (9),

dadurch gekennzeichnet, dass die Sensorvorrichtung (10) zur Anordnung stromabwärts eines Verschlussorgans (11) des Kondensatableiters (2) und zum Erkennen mindestens eines der folgenden eingerichtet ist:

einer Leckage des Kondensatableiters (2) durch Erfassen des Körperschalls der Kopplungsbaugruppe (14) und/oder des Gehäuses (9), einer Blockade des Strömungspfades (8) durch Erfassen der Temperatur der Kopplungsbaugruppe (14) und/oder des Gehäuses (9), und/oder dadurch gekennzeichnet, dass die Kopplungsbaugruppe (14) ein Kopplungsteil (15), welches zur lösbaren Verbindung mit dem Gehäuse (9) eingerichtet ist, und einen Adapter aufweist, der dazu eingerichtet ist, den Sensor (12, 39) körperschall- und/oder temperaturleitend mit dem Kopplungsteil (15) zu verbinden, und/oder dadurch gekennzeichnet, dass die Kopplungsbaugruppe (14) umfasst:

- ein Kopplungsteil (15), welches mit einer korrespondierenden Kopplungs-Schnittstelle (9a) des Gehäuses (9) lösbar in Eingriff bringbar ist,
- ein mittelbar und körperschallleitend mit dem Gehäuse (9) verbundenes Halteteil (16, 41), welches zur form- und/oder kraftschlüssigen Verbindung mit einem ersten Sensor (12, 39) und zur zumindest mittelbaren Verbindung mit dem Kopplungsteil (15) eingerichtet ist, und

- eine Sensor-Aufnahme (40), die dem Halteteil (16) zugeordnet und zur Aufnahme eines zweiten Sensors (39) zur Detektion der Temperatur eingerichtet ist.

18. Verfahren (100) zum Erfassen eines Zustandes oder einer Blockade und/oder Leckage eines Strömungspfades (8), insbesondere für einen Kondensatableiter (2) nach einem der Aspekte 1 bis 16, umfassend die Schritte:

- Bereitstellen einer Sensorvorrichtung (10) nach Anspruch 17,
- körperschallleitendes Verbinden der Sensorvorrichtung (10) mit einem Gehäuse (9) eines Kondensatableiters (2) mittels einer Kopplungsbaugruppe (14), wobei die Kopplungsbaugruppe (14) form- und/oder kraftschlüssig mit dem Sensor (12) verbunden und dazu eingerichtet ist, eine lösbare, form- und/oder kraftschlüssige Verbindung mit dem Gehäuse (9) und/oder eine Temperatur der Kopplungsbaugruppe (14) und/oder des Gehäuses (9) einzugehen, um im montierten Zustand den Körperschall des Gehäuses (9) zu dem Sensor (12) zu leiten,
- Leiten des Körperschalls mittels der Kopplungsbaugruppe (14) zu mindestens einem Sensor (12),
- Detektieren (S1) von Körperschall und/oder einer Temperatur mittels des Sensors (12),
- Bereitstellen (S2) mindestens eines Sensorsignals durch den Sensor (12, 39),
- Senden (S3) des Sensorsignals an eine Auswerteeinheit (50), und
- Auswerten (S4) des Sensorsignals des Sensors (12),

wobei der Sensor (12) vorzugsweise den Körperschall detektiert und das Verfahren vorzugsweise ferner die Schritte umfasst:

- Bereitstellen mindestens eines zweiten Sensorsignals durch einen Temperatursensor (39),
- Senden des zweiten Sensorsignals an die Auswerteeinheit (50), und
- gemeinsames Auswerten des Sensorsignals des ersten Sensors (12) und des Temperatursensors (39).

Bezugszeichenliste

| | |
|---|---|
| 1 | Regelarmatur |
| 2 | Kondensatableiter |
| 3 | Einlassflansch |
| 5 | Auslassflansch |
| 7 | Kondensatumlenkung mit einem Schutzsieb |
| 8 | Strömungspfad |
| 9 | Gehäuse |
| 9a | Kopplungs-Schnittstelle |
| 10 | Sensorvorrichtung |
| 11 | Verschlussorgan |
| 12 | erster Sensor, piezoelektrischer Sensor |
| 14 | Kopplungsbaugruppe |
| 15 | Kopplungsteil, erste Schraube |
| 16 | Halteteil |
| 17 | zweite Schraube |
| 18 | Sensorgehäuse |
| 20 | Kopplungsabschnitt |
| 20a | Kontaktfläche |
| 21 | erster Schaftabschnitt |
| 23 | erster Kopfabschnitt |
| 25 | Kopplungs-Aufnahme |
| 27 | Kopplungsabschnitt |
| 28.1 | erstes Piezoelement |
| 28.2 | zweites Piezoelement |
| 29 | thermischer Isolator aus einem festen Dämmstoff |
| 31 | seismische Masse |
| 32 | Elektrode |
| 33 | Frontleiter |
| 34 | Spannteil, zweiter Kopfabschnitt |
| 35 | Verbindungsteil, Hülse |
| 35a | erster zylindrischen Abschnitt |
| 35b | zweiter zylindrischen Abschnitt |
| 35c | zentraler Abschnitt |
| 36 | Halteabschnitt, zweiter Schaftabschnitt |
| 37 | Hohlraum |
| 38 | Hülse |
| 39 | Temperatursensor |
| 40 | Sensor-Aufnahme |
| 41 | Halteteil, Rohrschelle |
| 42 | Gewindebohrung |
| 43 | Rohrabschnitt |
| 45 | Sender |
| 47 | Signalverbindung |
| 49 | Energiespeicher |
| 50 | Auswerteeinheit |
| 60 | Adapter |
| 60a | Anlagefläche |
| 62 | -Montageschnittstelle |
| 63 | Gewindebohrung |
| 64 | Kopplungsabschnitt |
| 65 | Werkzeugansatz |
| 66 | Aufnahmeraum |
| 67 | Wandung |
| 68 | Gehäuse-Schnittstelle |
| 69 | Sensor-Aufnahme |
| $A_L$ | Längsachse |
| L1 | erste Länge |
| L2 | zweite Länge |

R      radiale Richtung
D1     erster Außendurchmesser
D2     zweiter Außendurchmesser
100    Verfahren
110    S1
120    S2
130    S3
140    S4

**Patentansprüche**

1. Kondensatableiter (2) zur Regelung des Durchflusses von Fluiden, insbesondere Kondensatableiter (2) zum Ableiten von flüssigem Kondensat, mit

   - einem Gehäuse (9) mit einem Einlass (3) und einem Auslass (5),
   - einem zwischen dem Einlass (3) und dem Auslass (5) ausgebildeten Strömungspfad (8),
   - einem im Strömungspfad (8) angeordneten Verschlussorgan (11), welches dazu eingerichtet ist, den Strömungspfad (8) selektiv sperren bzw. freizugeben, und
   - einer an dem Gehäuse (9) befestigten Sensorvorrichtung (10) zum Überwachen des Betriebszustands des Kondensatableiters (2),
   wobei die Sensorvorrichtung (10) eine Kopplungsbaugruppe (14) zur Kopplung mit dem Gehäuse (9) sowie einen Sensor (12, 39) zur Erfassung von Körperschall und/oder zur Detektion einer Temperatur der Kopplungsbaugruppe (14) und/oder des Gehäuses (9) aufweist,
   **dadurch gekennzeichnet, dass** die Kopplungsbaugruppe (14) umfasst:

   - ein Kopplungsteil (15), welches mit einer korrespondierenden Kopplungs-Schnittstelle (9a) des Gehäuses (9) lösbar in Eingriff bringbar ist,
   - ein mittelbar und körperschallleitend mit dem Gehäuse (9) verbundenes Halteteil (16, 41), welches zur form- und/oder kraftschlüssigen Verbindung mit einem ersten Sensor (12, 39) und zur zumindest mittelbaren Verbindung mit dem Kopplungsteil (15) eingerichtet ist, und
   - eine Sensor-Aufnahme (40), die dem Halteteil (16) zugeordnet und zur Aufnahme eines zweiten Sensors (39) zur Detektion der Temperatur eingerichtet ist.

2. Kondensatableiter (2) nach Anspruch 1,

   **dadurch gekennzeichnet, dass** die Sensorvorrichtung (10) einen Sender (45) aufweist, welcher zur Übertragung eines Sensorsignals des Sensors (12, 39) mittels einer Signalverbindung (47) an eine dem Kondensatableiter

(2) zugeordnete Auswerteeinheit (50) eingerichtet ist, wobei die Auswerteeinheit (50) zur Auswertung des Sensorsignals des Sensors (12, 39) eingerichtet ist, um den Betriebszustand zu überwachen und insbesondere eine Blockade und/oder Leckage zu erkennen,
   wobei die Signalverbindung (47) vorzugsweise eine kabellose Signalverbindung ist und die Sensorvorrichtung (10) ferner einen Energiespeicher (49) aufweist.

3. Sensorvorrichtung (10) zum Überwachen des Betriebszustands eines Kondensatableiters (2) nach einem der Ansprüche 1 oder 2,
   **dadurch gekennzeichnet, dass** die Sensorvorrichtung (10) zur Anordnung stromabwärts eines Verschlussorgans (11) des Kondensatableiters (2) und zum Erkennen mindestens eines der folgenden eingerichtet ist:

   einer Leckage des Kondensatableiters (2) durch Erfassen des Körperschalls der Kopplungsbaugruppe (14) und/oder des Gehäuses (9),
   einer Blockade des Strömungspfades (8) durch Erfassen der Temperatur der Kopplungsbaugruppe (14) und/oder des Gehäuses (9).

4. Sensorvorrichtung (10) nach Anspruch 3,
   **dadurch gekennzeichnet, dass** die Kopplungsbaugruppe (14) einen Adapter (60) aufweist, der dazu eingerichtet ist, den Sensor (12, 39) körperschall- und/oder temperaturleitend mit dem Kopplungsteil (15) zu verbinden.

5. Sensorvorrichtung (10) nach Anspruch 4,,
   **dadurch gekennzeichnet, dass** das Halteteil (16) sich entlang einer Längsachse ($L_A$) mit einer Länge (L1) erstreckt und der Adapter (60) eine Adapter -Montageschnittstelle (62) aufweist, insbesondere eine Gewindebohrung (63) oder ein Außengewinde, die dazu eingerichtet ist, mit dem Halteteil (16) entlang von mindestens 1/3 der Länge (L1) des Halteteils (16,41) in Eingriff zu sein.

6. Sensorvorrichtung (10) nach einem der Ansprüche 4 oder 5,

   **dadurch gekennzeichnet, dass** das Kopplungsteil (15) als eine erste Schraube (15) mit einem ersten Schaftabschnitt (21) und einem ersten Kopfabschnitt (23) ausgebildet ist, und/oder
   das Halteteil (16) als eine zweite Schraube (17) mit einem zweiten Schaftabschnitt (36) und einem zweiten Kopfabschnitt (34) ausgebildet ist, wobei der Adapter (60) dazu eingerichtet ist, vorzugsweise lösbar, mit dem ersten Kopfabschnitt (23) und dem zweiten Schaftabschnitt (36) in Eingriff zu sein, und/oder das Kopplungsteil (15) eine Kopplungs-Aufnahme (25) und das Halteteil (16) und/oder der Adapter (60) einen korrespondierenden Kopplungsabschnitt (27, 64) aufweist, wobei die Kopplungs-Aufnahme (25) lösbar mit dem Kopplungsabschnitt (27, 64) in Eingriff bringbar ist.

7. Sensorvorrichtung (10) nach einem der Ansprüche 4 bis 6,

   **dadurch gekennzeichnet, dass** der Adapter (60) einen Aufnahmeraum (66) aufweist, der dazu eingerichtet ist, zumindest einen Abschnitt des Sensors aufzunehmen, und/oder die Sensorvorrichtung (10) ferner ein Sensorgehäuse (18) mit Kopplungsabschnitten (20) und der Adapter (60) eine korrespondierende Gehäuse-Schnittstelle (68) aufweist, die zur lösbaren Kopplung mit den Kopplungsabschnitten (20) eingerichtet ist, wobei die Gehäuse-Schnittstelle (68) vorzugsweise durch eine den Aufnahmeraum (66) in radialer Richtung (R) begrenzende Wandung (67) gebildet ist.

8. Sensorvorrichtung (10) nach einem der Ansprüche 4 bis 7, **dadurch gekennzeichnet, dass** der Adapter (60) sich entlang einer bzw. der Längsachse (L$_A$) mit einer Adapterlänge (L2) erstreckt und eine Sensor-Aufnahme (69) aufweist, welche sich vorzugsweise entlang mindestens ¾ der Adapterlänge (L2) erstreckt.

9. Kondensatableiter (2) nach einem der Ansprüche 1 oder 2, **dadurch gekennzeichnet, dass**

   - das Halteteil (16) mittelbar und körperschallleitend mit dem Gehäuse (9) verbunden ist und zur form- und/oder kraftschlüssigen Verbindung mit einem ersten Sensor (12, 39) und zur zumindest mittelbaren Verbindung mit dem Kopplungsteil (15) eingerichtet ist, und
   - dass die Kopplungsbaugruppe ferner eine eine Sensor-Aufnahme (40) umfasst, die dem Halteteil (16) zugeordnet und zur Aufnahme eines zweiten Sensors (39) zur Detektion der Temperatur eingerichtet ist.

10. Kondensatableiter (2) nach einem der Ansprüche 1, 2 oder 9,

    **dadurch gekennzeichnet, dass** der Sensor (12) ein piezoelektrischer Sensor ist, umfassend:

- mindestens ein erstes Piezoelement (28.1) und ein zweites Piezoelement (28.2),
- ein Paar Elektroden (32),
- eine seismische Masse (31), welche dazu eingerichtet ist, sich in Abhängigkeit des von dem Gehäuse (9) übertragenen Körperschalls relativ zu dem ersten Piezoelement (28.1) und/oder dem zweiten Piezoelement (28.2) zu bewegen, und
- einen zu der seismischen Masse (31) beabstandeten Frontleiter (33), welcher mit der Kopplungsbaugruppe (14) gekoppelt und dazu eingerichtet ist, das erste Piezoelement (28.1) und das zweite Piezoelement (28.2) relativ zu der seismischen Masse (31) anzuordnen,

wobei das Halteteil (16, 41) vorzugsweise zur form- und/oder kraftschlüssigen Verbindung der seismischen Masse (31) und des Frontleiters (33) eingerichtet ist, derart, dass das erste Piezoelement (28.1) und das zweite Piezoelement (28.2) zwischen der seismischen Masse (31) und dem Frontleiter (33) aufgenommen sind, und die seismische Masse (31) bewegbar mit dem Halteteil (16, 41) in Eingriff ist, wobei das Halteteil (16, 41) dazu eingerichtet ist, durch Leiten des Körperschalls von dem Gehäuse (9) eine mechanische Schwingung der seismischen Masse (31) anzuregen, sodass die seismische Masse (31) relativ zu dem ersten Piezoelement (28.1) und/oder dem zweiten Piezoelement (28.2) schwingt.

11. Kondensatableiter (2) nach Anspruch 10,

    **dadurch gekennzeichnet, dass** der Frontleiter (33) benachbart und beabstandet zu dem Kopplungsteil (15) und/oder dem Adapter angeordnet ist, sodass ein Hohlraum (37) zwischen dem Frontleiter (33) und der Kopplungsbaugruppe (14) ausgebildet wird, welcher den thermischen Isolator bildet, oder der Frontleiter (33) als eine Hülse (38) ausgebildet ist, und einen ersten Außendurchmesser (D1) angrenzend an das erste Piezoelement (28.1) und einen zweiten Außendurchmesser (D2) angrenzend an die Kopplungsbaugruppe (14), insbesondere das Kopplungsteil (15) oder den Adapter (60), aufweist, der kleiner als der erste Außendurchmesser (D1) und zur Anlage an einer korrespondierenden Anlagefläche (15a) des Kopplungsteils (15) oder an einer korrespondierenden Anlagefläche (60a) des Adapters (60) eingerichtet ist, und/oder die Kopplungsbaugruppe (14) einen thermischen Isolator (29, 37) aufweist, der dazu eingerichtet ist, die Wärmeübertragung von dem Gehäuse (9) zu dem Sensor (12) zu reduzieren.

12. Verfahren (100) zum Erfassen eines Zustandes oder einer Blockade und/oder Leckage eines Strömungspfades (8) für einen Kondensatableiter (2) nach einem der Ansprüche 1 oder 2, umfassend die Schritte:

- Bereitstellen einer Sensorvorrichtung (10) nach einem der Ansprüche 3 bis 8,
- körperschallleitendes Verbinden der Sensorvorrichtung (10) mit einem Gehäuse (9) eines Kondensatableiters (2) mittels der Kopplungsbaugruppe (14), wobei die Kopplungsbaugruppe (14) form- und/oder kraftschlüssig mit dem Sensor (12) verbunden und dazu eingerichtet ist, eine lösbare, form- und/oder kraftschlüssige Verbindung mit dem Gehäuse (9) und/oder eine Temperatur der Kopplungsbaugruppe (14) und/oder des Gehäuses (9) einzugehen, um im montierten Zustand den Körperschall des Gehäuses (9) zu dem Sensor (12) zu leiten,
- Leiten des Körperschalls mittels der Kopplungsbaugruppe (14) zu dem mindestens einem Sensor (12),
- Detektieren (S1) von Körperschall und/oder einer Temperatur mittels des Sensors (12),
- Bereitstellen (S2) mindestens eines Sensorsignals durch den Sensor (12, 39),
- Senden (S3) des Sensorsignals an eine Auswerteeinheit (50), und
- Auswerten (S4) des Sensorsignals des Sensors (12),

wobei der Sensor (12) vorzugsweise den Körperschall detektiert und das Verfahren vorzugsweise ferner die Schritte umfasst:

- Bereitstellen mindestens eines zweiten Sensorsignals durch einen Temperatursensor (39),
- Senden des zweiten Sensorsignals an die Auswerteeinheit (50), und
- gemeinsames Auswerten des Sensorsignals des ersten Sensors (12) und des Temperatursensors (39).

Fig. 1

Fig. 2

Fig. 3a

Fig. 3b

Fig. 4a

Fig. 4b

Fig. 5a

Fig. 5b

Fig. 6a

Fig. 6b

Fig. 7a

Fig. 7b

Fig. 8a

Fig. 8b

$L_A$

45

18

68

60

65

23

14

15

21

## Fig. 9a

$L_A$

45

18

16, 17

34

12

32

31

28.2

28.1

$D1$

39

$D2$

33, 38

67

68

18A

60a

66

$L_1$

$L_2$

62, 63

R

23

64

25

14

15

21

## Fig. 9b

Fig. 10a

Fig. 10b

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019003692 A1